# DEMANDE DE BREVET EUROPEEN

(11) **EP 1 429 245 A2**
(43) Date de publication de la demande: **16.06.2004**
(21) Numéro de dépôt: 04004016.4
(22) Date de dépôt: 14.06.2001
(51) Int. Cl.: G06F 9/45

(54) **Système informatique modulaire et procédé associé**

(30) Priorité: 16.06.2000 FR 0007754
(62) Demande divisionnaire de: 01945434.7
(71) Demandeur: Nexwave Solutions, 34070 Montpellier (FR)
(72) Inventeur: Marty, Emmanuel, 34000 Montpellier (FR)
(74) Mandataire: Schrimpf, Robert

(57) **Abrégé**

L'invention concerne un procédé de développement de projets informatiques (P1, P2) destinés à être mis en oeuvre par un système informatique, procédé comprenant :
- une phase d'analyse fonctionnelle (601) en vue de recenser les fonctionnalités devant être assurées,
- une phase de création de composants (C1, C2) du projet pour remplir lesdites fonctionnalités, chaque composant étant constitué de deux parties principales :
   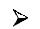 une partie implémentation (IMP),
   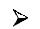 une partie d'interface descriptive (INT),
- une phase de compilation,
caractérisé en ce que :
- pendant la phase de compilation chaque composant est compilé indépendamment,
- la compilation individuelle de chaque composant implique la compilation du fichier source de l'interface du composant en une interface objet, pour constituer une forme binaire de l'interface inclues dans le fichier exécutable (M) du composant, et
- ledit système est entièrement constitué de composants.

## Description

La présente invention concerne de manière générale les systèmes logiciels qui permettent à des utilisateurs d'interagir avec des matériels informatiques.

Plus précisément, l'invention concerne un système logiciel comprenant un système d'exploitation offrant des qualités de souplesse et de rapidité d'exécution qui ne sont pas envisageables même avec les systèmes d'exploitation actuels les plus performants.

L'invention concerne également un procédé associé à un tel système.

Et comme on le verra, l'invention s'applique de manière avantageuse (mais non limitative) au développement d'applications associées à des systèmes informatiques embarqués.

On rappelle que le système d'exploitation est un élément essentiel de tout système logiciel, dont il constitue la partie qui interagit directement avec la constituante matérielle d'un système informatique.

On connaît déjà de nombreux systèmes d'exploitation, qui permettent à des équipes de développement de créer des applications, et à des utilisateurs finaux de mettre en oeuvre ces applications.

Les systèmes d'exploitation existants se répartissent schématiquement en deux familles principales.

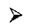 **Les architectures monolithiques**

La première famille est constituée des systèmes d'exploitation à architecture monolithique. De tels systèmes constituent un ensemble logiciel unique, qui comprend trois couches principales :
- une couche dite basse qui correspond au noyau du système. Le noyau peut être défini comme un ensemble de code passif et privilégié, chargé en permanence dans la mémoire du système et susceptible d'être utilisé par tous les processus applicatifs.
   Sa mission essentielle est de réguler l'utilisation des ressources partagées du système (mémoire, processeur, périphérique). Pour remplir cette mission, le noyau assure certaines fonctionnalités importantes parmi lesquelles :
   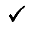 la gestion de la mémoire (distribution des ressources mémoire entre les applications en fonction de leurs requêtes...),
   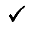 la gestion des processus (ordonnancement, gestion des accès au processeur, gestion multitâches...),
   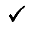 la gestion des drivers de périphérique,
   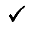 la gestion des fichiers (nom, adresse,...),
   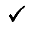 la gestion des utilisateurs (accès, profils...).
- une couche dite haute dédiée aux applications, et avec laquelle les utilisateurs peuvent interagir pour entrer dans le système des instructions et des requêtes à destination du noyau,
- un niveau intermédiaire dit de « bibliothèques », qui est parfois considéré comme une couche et dans lequel sont rassemblées les fonctionnalités récurrentes de manière à permettre leur mise en oeuvre rapide.

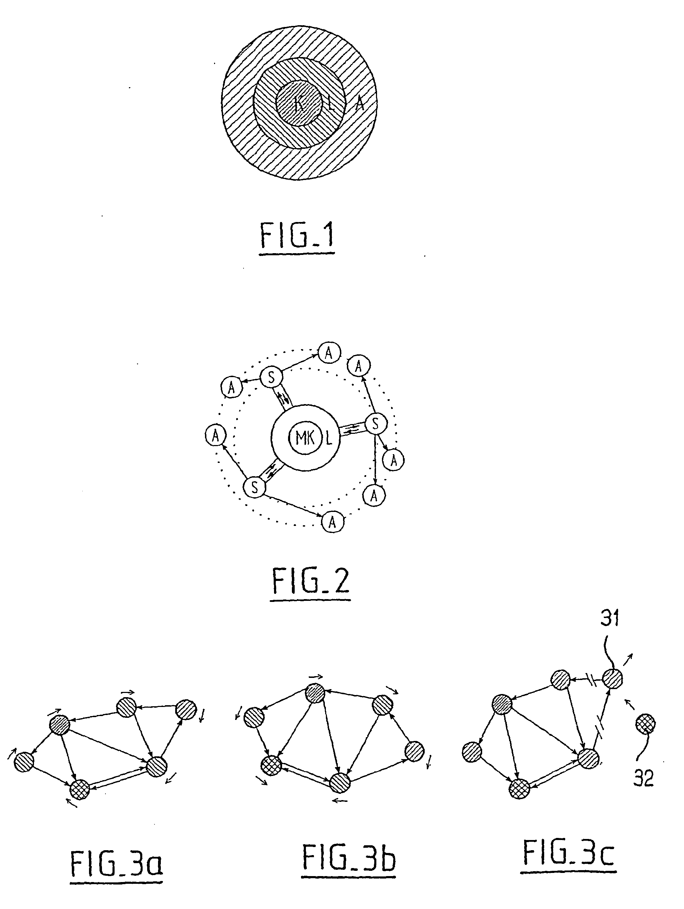

Une telle architecture monolithique est représentée schématiquement sur la figure 1 annexée au présent texte, qui montre l'agencement centralisé et hiérarchisé des couches K (noyau), L (bibliothèques) et A (applications).

La définition de « couches » permet de hiérarchiser les communications entre les éléments du système d'exploitation, les couches plus basses étant définies comme des couches « privilégiées » qui peuvent être appelées par des couches de niveau supérieur.

Les couches sont ainsi des classes d'éléments logiciels qui partagent les mêmes privilèges. Et on peut définir un privilège comme la faculté d'utiliser certaines ressources du système informatique (ressource matérielle, ou ressource logicielle).

Comme on l'a dit, un système bâti selon une telle architecture monolithique constitue un ensemble logiciel unique, compilable en « bloc ».

Un avantage de cette configuration est que les systèmes sont généralement stables et rapides.

Mais de tels systèmes d'exploitation présentent des limitations importantes en termes de flexibilité et d'évolution du système.

En effet, une modification dans le noyau implique systématiquement une recompilation complète de celui-ci. Pour chaque modification, il faut ainsi refaire une recette totale du système.

Et cette rigidité du système est pénalisante car les évolutions du système sont rendues lourdes et complexes, et sa maintenance coûteuse. Par ailleurs, le système peut devenir instable du fait de « rajouts » successifs.

En outre, dans le cas des systèmes informatiques embarqués (c'est-à-dire dont une partie au moins est destinée à être intégrée dans un matériel mobile tel qu'un véhicule, un téléphone portable,...), cette rigidité peut se révéler extrêmement pénalisante, car elle oblige également à fixer a priori un certain nombre de caractéristiques du système informatique (comme le fait de privilégier la vitesse d'exécution, ou encore la taille de la mémoire...).

Or, la diversité des applications embarquées confronte souvent les programmeurs à des exigences variées des systèmes informatiques associés, et il serait avantageux de pouvoir librement définir et faire évoluer les caractéristiques principales du système.

Ainsi, en raison des inconvénients évoqués ci-dessus et découlant principalement de la rigidité des systèmes d'exploitation monolithiques, cette architecture monolithique est essentiellement destinée à des applications ne nécessitant pas d'évolution logicielle ou matérielle importante, et elle est mal adaptée aux systèmes embarqués.

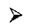 **Les architectures micro-noyau**

Pour tenter de pallier cette limitation, une deuxième famille d'architecture a été imaginée pour les systèmes d'exploitation. Ce sont les systèmes de type micro-noyau, tels que représentés sur la figure 2.

Cette figure montre que les systèmes micro-noyau sont, à l'instar des systèmes monolithiques, constitués par des couches concentriques entourant un noyau central qui constitue le « coeur » du système d'exploitation.

L'élément de noyau MK est ici réduit à un « micro-noyau » qui ne remplit que les fonctionnalités essentielles nécessaires au fonctionnement du système, à savoir :
- La gestion de la mémoire,
- La gestion des processus, au moins pour ce qui concerne les processus dits de bas niveau - il s'agit de la commutation des tâches. On précise que certains systèmes micro-noyau gèrent les processus haut niveau à l'aide d'un serveur, alors que d'autres les gèrent au moyen du micro-noyau lui-même,
- La gestion des ports (boîtes aux lettres) et le passage de messages,
- L'arbitrage de l'allocation des ressources matérielles, entre les différents drivers (un driver étant défini comme un pilote, c'est à dire un programme qui contrôle le fonctionnement d'une carte ou de tout périphérique).

Les autres fonctionnalités traditionnellement remplies par les noyaux des systèmes monolithiques sont remplies par des serveurs S. Ces serveurs forment une couche intermédiaire entre la couche supérieure des applications A et la couche L des bibliothèques qui entourent directement le micro-noyau MK. Ils sont prioritaires par rapport aux applications A.

Une telle architecture micro-noyau permet de faire évoluer le système d'exploitation sans nécessiter la recompilation de l'ensemble du système ; cette deuxième famille de systèmes d'exploitation autorise ainsi une certaine souplesse par rapport aux systèmes monolithiques.

Mais les architectures de cette famille restent construites en couches successives autour d'un noyau central, et tous les échanges de communication internes au système d'exploitation doivent nécessairement passer par le micro-noyau.

Or le passage des communications dans les couches successives du système, plus nombreuses que dans le cas des systèmes monolithiques, induit des traitements supplémentaires et ralentit le fonctionnement général du système.

Et il est par conséquent nécessaire d'optimiser ces échanges de communication pour tout développement nouveau du système, ce qui complexifie le travail des programmeurs.

Il apparaît donc que les systèmes micro-noyau, s'ils apportent une souplesse supplémentaire par rapport aux systèmes monolithiques, sont associés à des traitements plus longs et ne représentent qu'une solution imparfaite.

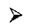 **Commentaire supplémentaire sur les architectures existantes**

Par ailleurs, les systèmes actuels (monolithiques et micro-noyau) sont tous centrés sur un élément de noyau autour duquel des couches successives sont hiérarchisées en fonction de privilèges d'accès prédéterminés.

Dans tous ces systèmes en effet, chaque programme est systématiquement associé à une couche donnée selon une typologie immuable inhérente au système lui-même, de sorte que ce programme sera systématiquement assorti d'un niveau de privilèges dont le contrôle échappe aux programmeurs, ce qui constitue un premier inconvénient commun aux systèmes existants.

Ainsi, les programmes peuvent être par exemple :
- un code "noyau" ou "superviseur" ou "système" (le code privilégié qui gère l'interaction avec le matériel),
- un élément de "bibliothèque" de fonctionnalités passives (mathématiques, décompression vidéo, etc.),
- un code applicatif.

Ces différents types de code correspondent souvent à des formats de fichier différents, et sont gérés de manière différente par des éléments différents du système d'exploitation.

Et il n'est alors pas possible de visualiser avec un seul outil, l'ensemble des programmes installés dans le système; de même il n'est généralement pas possible de remplacer pendant le fonctionnement du système, les parties "noyau", qui forment un bloc opaque et indivisible.

Il s'ensuit qu'il faut utiliser des outils différents pour créer et déboguer ces différents types de code, ce qui complexifie dans tous les cas les opérations de développement ; ceci constitue un deuxième inconvénient commun aux systèmes existants.

Et on comprend que le noyau des systèmes existants constitue le centre absolu du système. Ce noyau a un statut spécial de par son niveau de privilèges ; il constitue la partie la moins portable du système et ne peut être modifié de manière simple.

Par ailleurs, une autre caractéristique commune aux systèmes logiciels existants est que leur conception s'est effectuée avec :
- une phase d'analyse fonctionnelle qui a permis de décrire le système en termes de fonctionnalités à remplir, ce qui constitue un niveau descriptif très intuitif et immédiatement intelligible,
- suivie d'une écriture et d'une compilation de programmes lors de laquelle ce niveau d'intelligibilité et de lisibilité est altéré, les programmes constituant des ensembles opaques dont le fonctionnement est prédéterminé.

Les programmes de ces systèmes fonctionnent sur demande comme des « automates », et le noyau ne fait que travailler en réaction en fonction des besoins exprimés par les applications.

Il apparaît ainsi que le noyau, s'il adapte les ressources et peut utiliser des fonctions d'optimisation pour améliorer le fonctionnement général du système, travaille toujours en réaction en aval par rapport aux besoins exprimés par les applications. Ceci constitue une autre limitation essentielle des systèmes existants.

Comme on le verra, dans le cas de l'invention au contraire, le fonctionnement de tous les composants du système est intégré et les liens fonctionnels établis lors de la phase d'analyse fonctionnelle sont préservés dans l'architecture du système.

Ainsi, par rapport à un système connu tel que celui représenté par le langage Java (marque déposée) dont on trouvera une description dans le document « introduction to programming using Java ». Version 3.0, summer 2000 » de D.J. ECK - Department of mathematics and computer science. Hobart and William Smith College. Geneva, New-York, US 24/05/2000, accessible le 7 mars 2001 à l'adresse Internet http://math.hws.edu/eck/cs124/downloads/Javanotes3.pdf>, il serait avantageux d'offrir un degré de souplesse supplémentaire dans l'établissement des relations entre les entités.

Par « entité », on entend dans le cas des langages connus (Java par exemple) les objets et classes qui peuvent être mis en oeuvre.

Dans le cas du langage Java, en effet, si une entité donnée peut effectivement appeler d'autres entités qui sont nécessaires à son fonctionnement, le programmeur doit nécessairement spécifier de manière explicite quelles sont les entités qui doivent être chargées dans la mémoire vive du système pour permettre le bon fonctionnement de ladite entité appelante donnée.

Il apparaît ainsi que ce type de langage connu, s'il offre effectivement une certaine souplesse liée à une architecture objet, impose tout de même de choisir dès la conception des entités spécifiques, ce qui limite grandement la souplesse du système.

En outre, un tel système connu ne retourne pas de message d'erreurs lors des opérations de chargement, de sorte qu'il est possible qu'une entité défectueuse ou incapable de remplir son rôle soit chargée dans le système. Et la déficience de ladite entité ne sera constatée que lors du fonctionnement général du système, ou lors d'opérations de test qu'il sera alors nécessaire de prévoir spécifiquement.

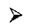 **Buts de l'invention**

Le but principal de l'invention est de proposer un système d'exploitation offrant des qualités de souplesse et de rapidité d'exécution qui ne sont pas envisageables même avec les systèmes d'exploitation actuels les plus performants.

Un autre but de l'invention est de proposer un système logiciel qui permette en outre de s'affranchir des inconvénients évoqués ci-dessus à propos de l'ensemble des systèmes existants.

Et un autre but encore de l'invention est de fournir une solution logicielle adaptée aux contraintes inhérentes à la conception des systèmes embarqués.

Afin d'atteindre ces buts, l'invention propose un procédé de développement de projets informatiques destinés à être mis en oeuvre par un système informatique, procédé comprenant :
- une phase d'analyse fonctionnelle en vue de recenser les fonctionnalités devant être assurées,
- une phase de création de composants du projet pour remplir lesdites fonctionnalités, chaque composant étant constitué de deux parties principales :
   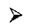 une partie implémentation,
   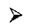 une partie d'interface descriptive,
- une phase de compilation,
caractérisé en ce que :
- pendant la phase de compilation chaque composant est compilé indépendamment,
- la compilation individuelle de chaque composant implique la compilation du fichier source de l'interface du composant en une interface objet, pour constituer une forme binaire de l'interface incluse dans le fichier exécutable du composant, et
- ledit système est entièrement constitué de composants.

Des aspects préférés, mais non limitatifs du procédé selon l'invention sont les suivants :
- la partie interface d'un composant décrit quelle fonctionnalité est fournie par le composant et quelles fonctionnalités devront lui être fournies, lors de son exécution,
- la partie interface d'un composant définit dans un langage de dépendances le format des données devant être fournies en entrée au composant et le format des données en sortie du composant,
- ledit format est dépendant uniquement de la fonctionnalité réalisée, et non de la façon dont la fonctionnalité est réalisée par la partie implémentation du composant,
- des propriétés peuvent être associées avec des fonctionnalités demandées par le composant et/ou avec des fonctionnalités que le composant fournit,
- des critères peuvent être définis à partir de propriétés associées à l'interface du composant,
- lesdites propriétés associés à l'interface sont précisées avec des opérateurs associés à la description faite dans l'interface et lesdits opérateurs permettent de n'autoriser l'importation d'une autre interface que si la valeur d'une propriété de cette autre interface correspond à un critère défini,
- lesdits critères peuvent être prédéterminés lors de la conception du projet informatique,
- lesdits critères peuvent être déterminés dynamiquement lors de l'exécution même du projet informatique,
- une fonctionnalité requise par un composant appelant peut-être définie dans la partie interface dudit composant appelant avec une propriété « loadtime », de manière à ce que le composant qui remplit ladite fonctionnalité requise soit recherché et chargé préalablement au chargement dudit composant appelant,
- la compilation de l'interface d'un composant est réalisée par un compilateur de dépendances pour produire une forme binaire de l'interface qui est incluse dans le composant exécutable,
- pour la compilation de l'interface, le compilateur de dépendances réalise les opérations suivantes :
   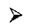 analyse du texte du fichier source de l'interface,
   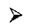 vérification de sa cohérence,
   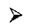 traduction en données binaires qui seront compréhensibles par un composant chargé en permanence dans le système.
- lors de la compilation d'un composant, le compilateur de dépendances génère automatiquement des fichiers pour appeler les fonctionnalités citées dans l'interface du composant et devant être fournies au composant,
- un graphe des liens recense les composants qui sont chargés dans le système,
- ladite forme binaire de l'interface est exploitable à l'exécution par le système, afin de relier les composants entre eux selon les fonctionnalités demandées.

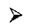 **Introduction des figures**

D'autres aspects, buts et avantages du système selon l'invention apparaîtront mieux à la lecture de la description suivante d'une forme de réalisation de l'invention, faite en référence aux dessins annexés sur lesquels, outre les figures 1 et 2 qui ont déjà été commentées :
- les figures 3a à 3c sont trois représentations schématiques d'un système d'exploitation selon l'invention,
- la figure 4 est une représentation schématique d'un composant du système selon l'invention,
- la figure 5 est une représentation schématique des étapes d'élaboration d'un tel composant,
- la figure 6 est un logigramme illustrant la création et la mise en oeuvre d'un composant d'un système d'exploitation selon l'invention,
- la figure 7 représente le mode de répartition et de chargement des composants logiciels du système selon l'invention,
- la figure 8 illustre la réduction de consommation de mémoire lors du chargement et du déchargement dynamiques de composants d'un système selon l'invention,
- la figure 9 est un logigramme illustrant le remplacement dynamique d'un composant dans un système selon l'invention,
- les figures 10a, 10b et 10c sont trois cartographies des composants chargés dans un système selon l'invention. La figure 10a correspondant à une configuration minimale dans laquelle seuls sont chargés les composants strictement nécessaires au fonctionnement initial d'un système selon l'invention. La figure 10b correspond à une configuration de base permettant en outre une gestion multi-threads. La figure 10c correspond à une version enrichie d'un système selon l'invention.

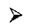 **Introduction générale au système**

On a dit que les systèmes existants, qu'ils soient monolithique ou micro-noyau, différencient systématiquement les programmes en fonction de la couche du système à laquelle ils sont associés.

Le système selon l'invention ne différencie pas les programmes de la sorte. Au contraire, dans le cas de l'invention, le système d'exploitation est entièrement constitué de composants non hiérarchisés. Ainsi, selon une caractéristique originale, le système selon l'invention ne présente pas une structure en couches.

Et bien que le programmeur d'un système logiciel conserve dans le cas de l'invention la possibilité d'associer à chaque composant du système un niveau de privilèges particulier pour communiquer avec les autres composants (ce niveaux de privilèges pouvant correspondre à ceux classiquement utilisés dans les systèmes de l'état de la technique - « noyau », « bibliothèque », « applicatif », ou bien être créé à la demande), le programmeur est libre d'effectuer ou non une telle association pour chaque composant, et de choisir un niveau de privilèges quelconque désiré pour le composant.

On précise qu'on définit le terme « programmeur » comme pouvant concerner une personne seule ou une équipe de développeurs. Un grand intérêt du système selon l'invention est comme on va le comprendre de permettre à des équipes de développeurs de travailler de manière la plus efficace possible, chaque développeur pouvant prendre en charge une fonctionnalité d'une application, en développant un composant.Et la gestion fine des privilèges offerte par le système selon l'invention ouvre de nombreuses possibilités, comme par exemple :
- la création, le développement et le test complet d'un composant en mode « non privilégié » (applicatif), et son exploitation sur la cible en mode « privilégié » (système) une fois le développement terminé et totalement validé. Cette approche permet la même souplesse de mise au point qu'un système à micro-noyau, en permettant de concevoir un pilote (« driver ») sous forme d'application, pour ensuite l'exploiter à un niveau de performances égal à un noyau monolithique, en mode «système»,
- la possibilité d'affecter des privilèges différents à l'intérieur d'un groupe de composants de même type (par exemple des « codecs », codeurs-décodeurs de données) : exploitation d'un composant simple (exemple : « codec » GIF) sous forme de composant système, pour la rapidité; et d'un composant complexe (exemple « codec » HTML ou Macromedia Flash (marques déposées) sous forme de composant utilisateur, moins rapide mais sécurisé et offrant une totale tolérance aux pannes.
   Ce choix au cas par cas permet au programmeur de construire son système entièrement en fonction de ses objectifs.

Les figures 3a à 3c illustrent schématiquement l'architecture d'un système selon l'invention, qui est uniquement réalisée à base de composants, et qui ne comporte pas d'élément « central » tel qu'un noyau ou un micro-noyau.

Ces composants ont comme on va le voir chacun une existence propre dans le système ; ils peuvent être créés, compilés, chargés en mémoire dans le système et déchargés indépendamment les uns des autres, ce qui permet de :
- mettre dynamiquement le système à jour (nouvelle version, correction de bugs...) sans jamais redémarrer («rebooter»),
- s'affranchir lors de la conception du système logiciel des « partis pris » peu portables dans l'abstraction du matériel qui est faite par le système logiciel, en offrant la possibilité de changer les politiques de gestion du matériel en fonction des besoins propres du produit final.

Chaque composant du système selon l'invention est dédié à une fonctionnalité unique, au contraire des systèmes d'exploitation classiques dans lesquels le noyau, ainsi que la plupart des programmes, remplissent des fonctionnalités multiples.

Et pour remplir la fonctionnalité qui lui est associée, chaque composant peut requérir l'exécution d'une ou plusieurs autres fonctionnalité(s), par un ou plusieurs autres composant(s).

Ainsi, pour fonctionner, le système selon l'invention met en communication chaque composant donné qui est chargé dans sa mémoire avec d'autres composants qui remplissent une fonctionnalité nécessaire au fonctionnement propre du composant donné.

Les figures 3a à 3c comprennent ainsi des flèches qui illustrent les canaux de communication qui sont établis par le système entre certains composants afin de leur permettre de se transmettre des fonctionnalités.

Ces figures illustrent également le caractère dynamique de l'architecture du système, un composant 31 pouvant être remplacé par un composant 32 pour remplir la même fonctionnalité, sans nécessiter le changement d'aucun autre composant, comme cela est représenté sur la figure 3c. Ces aspects vont être détaillés ci-dessous.

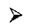 **Les composants - généralités**

### ■ Définition générale :

On comprend que le composant est un élément fondamental du système selon l'invention, aussi est-il important de le définir précisément.

Un composant au sens de l'invention est élément de code isolé, indépendant et autonome. Comme on va le décrire plus en détail, chaque composant du système selon l'invention possède les propriétés suivantes :
- il remplit une fonctionnalité unique, à laquelle il est dédié,
- il remplit totalement cette fonctionnalité. Une fonctionnalité donnée est exécutée dans un seul composant. Ceci permet de n'avoir à modifier ou remplacer qu'un seul composant si l'on veut altérer une fonctionnalité donnée, dans le déroulement d'une application ou de tout autre programme,
- comme pour la philosophie objet, la manière dont une fonctionnalité donnée est remplie par un composant n'est pas connue des autres composants qui utilisent cette fonctionnalité,
- chaque composant est compilé de manière indépendante, pour former un fichier exécutable séparé assimilable à une capsule du composant (appelé "module" du composant). Lors de la compilation, il n'y a pas d'édition de liens entre les composants. Ceci permet une flexibilité jusqu'ici inconnue, notamment pour les composants qui remplissent les fonctionnalités essentielles du système et attribuées au "noyau" dans les systèmes traditionnels,
- chaque composant est associé à un code exécutable, encapsulé dans son module à l'aide d'une interface qui est elle aussi individuellement associée au composant. Lors de la conception d'un composant, le concepteur décrit, dans un fichier texte qui constitue la version source de l'interface du composant, la fonctionnalité que le composant fournit, à l'aide d'un langage de description spécialement conçu à cet effet par la Demanderesse. Cette description est la seule information rendue disponible au système à propos du composant. Une telle encapsulation garantit l'absence d"'effets de bords" et d'interdépendances incontrôlables entre composants du système.

Un composant du système selon l'invention est donc un objet logiciel totalement encapsulé (dans le module) et isolé du reste du système à l'aide d'une interface, qui comme on va le voir possède des propriétés :
- de réutilisabilité et de modularité (un même composant pouvant être mis en oeuvre dans différentes applications - ou de manière plus générale dans différents programmes),
- d'indépendance envers l'environnement (chaque composant étant généré individuellement et pouvant être chargé et déchargé indépendamment dans le système),
- de liaison dynamique (les composants intervenant à la demande, et non de manière systématique),
- et de spécialisation dans une fonctionnalité donnée.

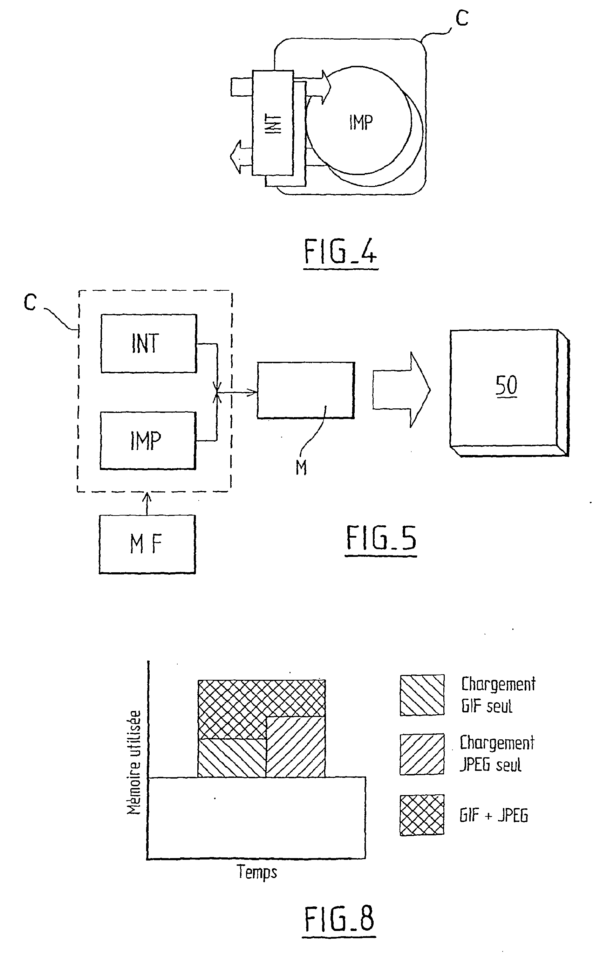

Un composant C est constitué de deux parties principales, comme illustré sur la figure 4 :
- une partie IMP qui permet la réalisation de la fonctionnalité associée au composant, partie que l'on nommera par convention « partie implémentation » du composant. Cette partie correspond au code qui est exécuté pour remplir la fonctionnalité du composant, et/ou à une implémentation matérielle sur des éléments de hardware. Par "code", on entend un ou plusieurs programmes, pouvant être écrit(s) dans tout langage connu en soi, le(s)dit(s) programme(s) étant destiné(s) à remplir la fonctionnalité associée au composant et exécutant pour cela une ou plusieurs fonctions,
- et une partie INT « interface » du composant, qui est la partie descriptive autorisant le dialogue avec les autres composants du système.

### ■ Encapsulation des composants

Chaque composant est encapsulé dans un « module », fichier exécutable qui relie les fichiers objets correspondant à l'interface et au code du composant. Comme on le verra, ce fichier est généré de manière autonome pour chaque composant, indépendamment des autres composants qui constituent le système selon l'invention.

Pour générer un composant, il est nécessaire de définir les fonctionnalités externes au composant et dont il aura besoin d'utiliser les résultats lors de son exécution ; ceci relève d'une démarche d'analyse fonctionnelle classique.

Par contre, comme on va le comprendre, le système selon l'invention conserve les informations sémantiques issues de cette phase d'analyse fonctionnelle jusque dans le cadre de l'exécution du composant.

Ceci facilite grandement les évolutions du système et augmente sa lisibilité.

Les fonctionnalités externes au composant sont décrites dans le fichier source d'interface du composant, à l'aide du langage de dépendances créé par la Demanderesse et évoqué plus haut.

Plus précisément, chaque fichier source INT d'interface associé à un composant C permet de décrire totalement ce composant. Il décrit, les éléments d'interface qu'il doit importer d'autres composants, et ceux qu'il exporte vers d'autres composants.

Ce fichier sera compilé (à l'aide d'un fichier de compilation MF, appelé encore Makefile) et lié au(x) fichier(s) objet correspondant au code de la partie implémentation IMP (c'est à dire à chacun du ou des fichier(s) source(s) de la partie implémentation du composant), pour former le module M du composant qui constitue la version exécutable du composant, comme représenté schématiquement sur la figure 5 ci-après. Le langage de dépendance utilisé pour créer les fichiers sources d'interface sera expliqué plus loin dans ce texte.

Un module M peut alors être chargé sur une cible 50 (la cible étant définie comme le matériel informatique sur lequel le système logiciel selon l'invention fonctionne), et être immédiatement reconnu par les autres composants présents sur cette cible, comme cela va être détaillé.

### ■ La partie implémentation du composant

La partie implémentation IMP est le coeur opérationnel du composant. C'est la partie qui permet la réalisation effective de la fonctionnalité du composant. Cette fonctionnalité peut être réalisée de différentes façons par la partie implémentation, suivant les fonctions mises en oeuvre par le code.

Ainsi, différents composants peuvent chacun réaliser une même fonctionnalité, mais en prenant en compte des critères différents, critères qui peuvent être prédéterminés lors de la conception de l'application ou du programme qui fait intervenir le composant, ou déterminés dynamiquement lors de l'exécution même de l'application.

Ces critères sont décrits sous forme de propriétés (par exemple void, char, etc....) associées à l'interface du composant, qui seront décrites plus loin dans ce texte.

Les critères sont exprimés en fonction d'une de ces propriétés, qui est définie dans l'interface du composant qui exporte la fonctionnalité, l'interface du composant qui importe la fonctionnalité associant un opérateur de comparaison à cette propriété (<, >, =, etc... comme décrit ci-dessous), ainsi qu'une valeur de comparaison.

Et il est possible d'adapter le système ou l'application de façon statique ou dynamique, en fonction de critères externes au composant (matériels par exemple), ou de l'état actuel du système et de l'application lors de l'exécution.

Le fichier d'interface de chaque composant fournit ainsi un ensemble de meta-informations, qui permettront comme on va le voir à un composant spécifique du système (le gestionnaire de dépendances) de gérer de manière pertinente les relations entre les composants, en fonction des critères évoqués plus haut (qui peuvent concerner une version du composant, une localisation de ce composant, une donnée de l'état du système...).

Et on précise que si chaque fonctionnalité peut être réalisée uniquement par un code (implémentation « logicielle » de la fonctionnalité), il est également possible de faire intervenir au moins un élément de hardware pour remplir la fonctionnalité (implémentation « matérielle » de la fonctionnalité).

### ■ La partie interface du composant

La partie interface permet de décrire précisément quelle fonctionnalité est fournie par le composant et quelles fonctionnalités devront lui être fournies, lors de son exécution.

Elle définit, dans le langage de dépendances développé par la Demanderesse, le format des données devant être fournies en entrée au composant et le format des données en sortie du composant. Ce format est dépendant uniquement de la fonctionnalité réalisée, et non de la façon dont la fonctionnalité est réalisée par la partie implémentation.

Cette partie interface permet de constituer une description de la fonctionnalité réalisée par le composant, indépendamment de la manière dont cette fonctionnalité est réalisée par la partie implémentation. En effet, quel que soit le mode de mise en oeuvre de la fonctionnalité par un code (ou par un élément matériel programmé), cette fonctionnalité reste identique. Elle effectue les mêmes traitements, demande les mêmes informations en entrée et fournit les mêmes données en sortie.

La partie interface autorise donc largement les évolutions du système. Une implémentation logicielle d'une fonctionnalité (correspondant à un composant dont la partie implémentation est constituée de code) pourra ainsi être réalisée plus tard par une implémentation matérielle.

Dans ce cas, le composant correspondant comprend un fichier d'interface, mais sa partie impléméntation est constituée d'un programme très simple décrivant la liaison avec l'élément matériel.

Inversement, une implémentation matérielle pourra être remplacée sans aucun impact sur les autres composants par une implémentation logicielle d'une fonctionnalité.

Une interface est définie avec le mot-clé « interface » dans la description du module du composant.

Le tableau suivant décrit différentes propriétés d'une fonctionnalité ; ces propriétés peuvent concerner des fonctionnalités demandées par le composant (sens = import), ou la fonctionnalité que le composant fournit (sens = export) :

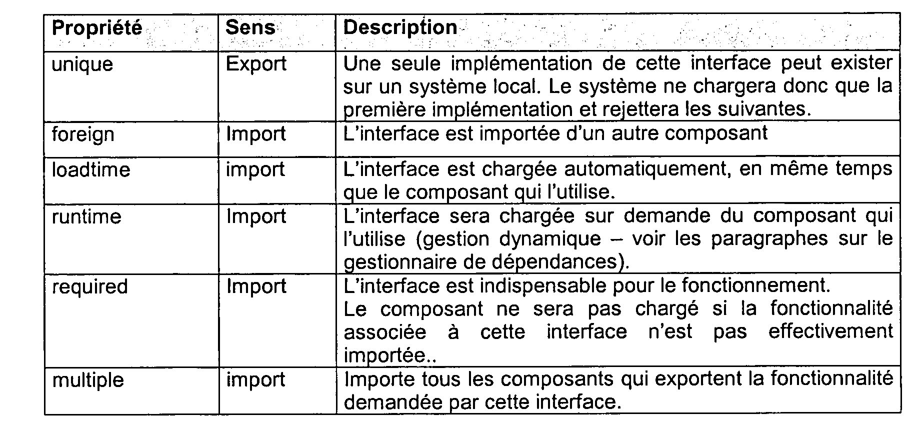

Une interface peut être définie dans son fichier texte à l'aide de différentes propriétés. Un exemple est donné ci-après :

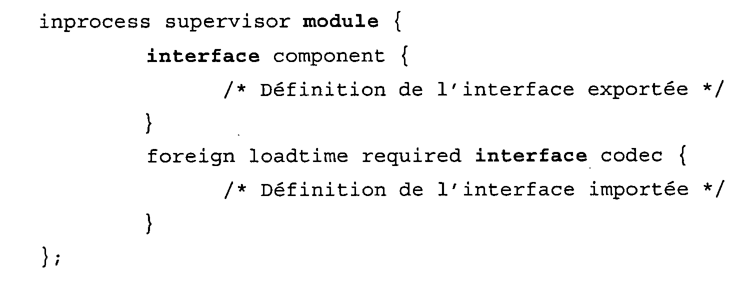

### ⇒ Propriétés d'une interface :

Les propriétés d'une interface permettent de définir les critères évoqués plus haut dans ce texte. Elles sont typées, comme en langage C (marque déposée). Le tableau suivant décrit les différents types de propriétés :

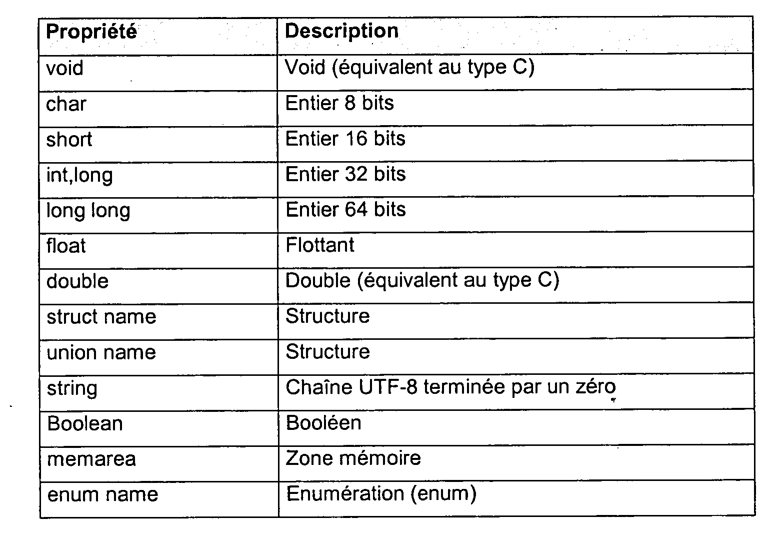

Les extensions suivantes peuvent être associées à ces propriétés :

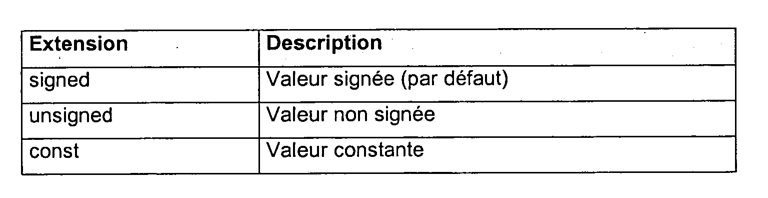

Lors de la description des dépendances dans le fichier d'interface, des opérateurs permettent de préciser les propriétés des interfaces. Ils permettent ainsi de n'autoriser l'importation d'une autre interface que si la valeur d'une propriété de cette autre interface correspond à un critère bien défini.

Les opérateurs suivants peuvent être associés aux propriétés des interfaces :

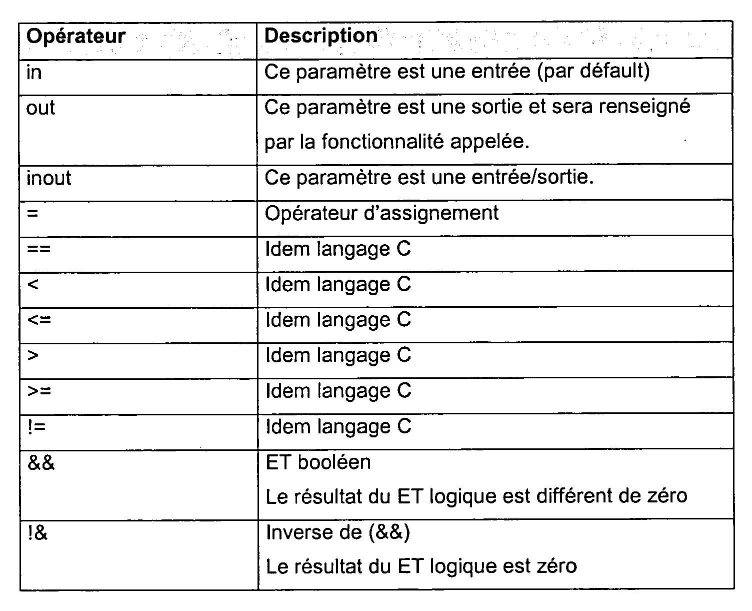

Le mot-clé « undef » peut être utilisé comme valeur de comparaison pour les propriété ou les fonctions. Dans l'exemple ci-dessous, le composant considéré nécessite une interface nommée codec, contenant . une propriété entier 32 bits nommée mainType, dont la valeur doit être 2 exactement. Cette interface doit faire réaliser une fonctionnalité Func() prenant en paramètre une chaîne de caractères et retournant un entier signé 32 bits.

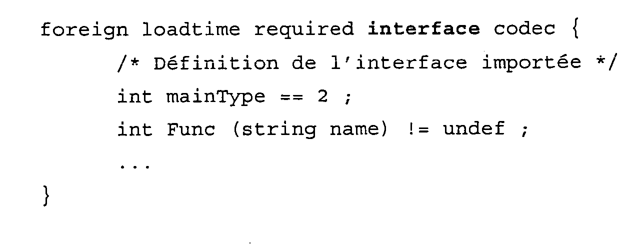

La fourniture et la demande de fonctionnalité se font donc par la description d'interfaces de programmation, fournies ou demandées. Un composant peut par exemple fournir l'interface de programmation "scheduler" (ordonnanceur qui permet la création/destruction/manipulation de processus et de threads et leur synchronisation), tout en demandant l'interface "memory" (gestion de la mémoire), l'interface "timer" (gestion d'un compteur de temps, dont l'ordonnanceur a besoin pour interrompre un processus au bout d'un temps donné et passer au suivant), etc.

Ces interfaces de programmation peuvent contenir à la fois :
- des propriétés (version, type de gestion mémoire, propriétés du séquençage, etc.),
- et des méthodes (fonctions) appelées pour l'exécution du composant.

Les propriétés sont utilisables à la fois lors de la fourniture, et lors de la demande, d'une interface donnée. On peut donc exprimer que l'interface memory associée à un composant en est à sa version 1.5.2 (propriété exprimée lors de la fourniture de l'interface); ou encore que l'on demande une interface memory dont la version est au moins 1.0.0 mais pas la version 1.0.4 car on sait qu'elle a une "bogue" incontournable (propriété exprimée lors de la demande de l'interface) ;

Et le contenu de l'interface (propriétés et méthodes) constitue une description écrite par le programmeur à l'aide du langage créé par la Demanderesse à cet effet.

Ce langage est compilé par le compilateur des dépendances, dans une forme binaire qui est incluse dans le composant exécutable que constitue le module, au même titre que le code du composant et les données associées.

Cette forme binaire est facilement exploitable à l'exécution, par le système, afin de relier les composants entre eux, selon les fonctionnalités demandées.

Ce langage est également utilisé pour préciser quel type de code le composant contient ("système" ou non, "passif" (bibliothèque) ou "actif" (application), etc.), et quel type de code peut accéder à une fonction donnée (permettant de restreindre les fonctions 'dangereuses' du système aux appelants "système" par exemple); ceci permet le choix du moyen de communication le plus optimisé.

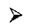 **Les composants - création et chargement dans le système**

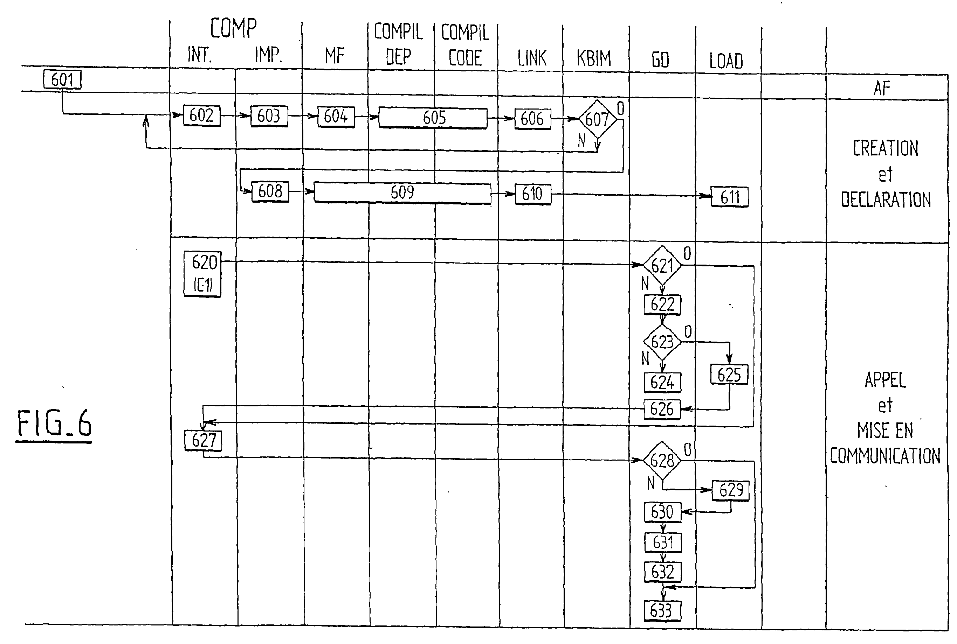

En référence maintenant à la figure 6, on va décrire les étapes de la création d'un composant du système selon l'invention, et de sa mise en oeuvre dans le système selon l'invention.

Cette figure 6 est un logigramme dans lequel les colonnes représentent différents éléments utilisés pour la création et la mise en oeuvre des composants du système selon l'invention. De gauche à droite, on trouve ainsi sur ce tableau :
- deux colonnes "COMP" correspondant au composant lui-même, la colonne la plus à gauche "INT" correspondant à la partie interface alors que la colonne suivante "IMP" correspond à la partie implémentation,
- une colonne "MF" pour le makefile qui est le fichier de compilation du composant,
- une colonne "COMPIL DEP" correspondant à un élément de conception des composants qui est le compilateur de dépendances, élément spécifiquement développé par la Demanderesse pour la compilation d'un composant,
- une colonne "COMPIL CODE" correspondant au(x) compilateurs) de type connu(s) du ou des fichier(s) qui constitue(nt) le code du composant,
- une colonne "LINK" correspondant à l'éditeur de lien,
- une colonne "KBIM" correspondant à un outil de développement particulier du système selon l'invention qui intervient lors de la conception d'un projet (notion qui est définie ci-après),
- une colonne "GD" dédiée à un composant particulier du système selon l'invention, nommé le gestionnaire de dépendance (ou GD), qui constitue comme on va le voir le coeur du système selon l'invention, mais se différencie totalement des noyaux et micro-noyaux de l'état de la technique,
- une colonne "LOAD" correspondant à des composants particuliers du système selon l'invention, les loaders, qui permettent de charger les composants du système dans une zone de mémoire vive de la cible,
- la colonne de droite donnant une indication des différentes phases décrites.

### ■ Création du composant

On définit ici la notion générale de "projet", qui désigne un ensemble de composants ayant une finalité commune dans le système selon l'invention. Un projet peut ainsi correspondre à une application, mais également de manière plus générale à tout type de programme pouvant être exécuté par un système informatique, et différent d'une application (gestionnaire de périphériques par exemple).

Préalablement à la création d'un projet destiné à être mis en oeuvre dans le système selon l'invention, on procède en 601, de manière classique, à une phase d'analyse fonctionnelle (AF).

Cette phase permet de définir les différents composants nécessaires, leurs fonctionnalités respectives, et les besoins associés à chacune de ces fonctionnalités (fonctionnalités devant être assurées par d'autres composants). Il est possible comme on va le voir d'utiliser des composants déjà chargés dans le système pour apporter certaines fonctionnalités au projet.

Une fois cette analyse préalable effectuée, et les besoins en termes de composants connus, le programmeur procède pour chaque composant à la succession des étapes 602 à 606 :
- en 602, création d'un fichier source d'interface du composant dans lequel sont décrites, dans le langage de dépendances développé par la Demanderesse, les caractéristiques du composant. On reviendra plus loin dans ce texte sur les caractéristiques de ce langage, et ses principales possibilités,
- en 603, le programmeur crée ensuite le code, c'est à dire le(s) fichier(s) source permettant d'assurer la fonctionnalité du composant, dans un ou plusieurs langage(s) pouvant être de type(s) connu(s). Lors de cette étape, la ou les fonctions(s) à exposer par le composant ne sont définies qu'en termes de prototype, le code correspondant n'étant pas écrit.
   On précise qu'une fonctionnalité correspond à un traitement ou une opération à réaliser (la description d'une fonctionnalité sera exprimée en français), par exemple la gestion de la mémoire, lors de lancement des processus en cours pour gérer leur accès au processeur de la cible, l'affichage graphique, etc...,. Ce qu'on appelle fonction, est une partie de code logiciel qui réalise également un traitement. La fonction est la traduction logicielle dans un langage de programmation de la fonctionnalité (d'où son nom).
   Dans tous les langages de programmation, une fonction est réalisée de manière très proche de notre système. Elle comprend :
   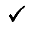 un prototype qui définit les paramètres d'entrée et de sortie (leur nom et leur type). Ce prototype peut être assimilé à la partie interface de nos composants (son rôle est identique),
   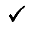 Une partie de code. Cette partie effectue un traitement sur des données et permet ainsi de déterminer le résultat à fournir en sortie.
   On précise également que le prototype d'une fonction définit le nom de la fonction, ses paramètres d'entrées (leurs noms et leurs types) ainsi que le type d'information du résultat retourné par la fonction.
- en 604, le programmeur crée un Makefile dans lequel il spécifie en particulier :
   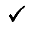 le(s) langage(s) utilisé(s) pour le(s) fichier(s) source créé(s) lors de l'étape précédente 603,
   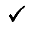 le(s) fichier(s) source correspondant à la partie implémentation du composant,
   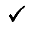 les options de compilation,
- en 605, le programmeur crée avec le compilateur des dépendances et le(s) compilateurs) correspondant au(x) langage(s) utilisé(s) un prototype du composant, comprenant :
   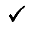 une interface objet résultant de la compilation du fichier source d'interface du composant créé en 602, par le compilateur des dépendances. Pour cette compilation de l'interface, le compilateur des dépendances analyse le texte du fichier source de l'interface, vérifie sa cohérence, puis le traduit en données binaires qui seront compréhensibles par le GD. Le compilateur de dépendances génère automatiquement des fichiers pour appeler les fonctionnalités citées dans l'interface et devant être fournies au composant. Ces fichiers sont des fichiers de type « include », générés par le compilateur de dépendances. Un fichier « include » est généré pour chaque langage d'implémentation du code. Le rôle de ces fichiers est de définir dans le système informatique un espace de nommage (c'est à dire un contexte auquel sont associées des correspondances), externe à celui du composant et distinct de lui, qui permet d'accéder aux fonctionnalités qui sont demandées par le composant dans son interface. Chacun de ces fichiers « include » définit ainsi des structures qui pourront être appelées par l'interface du composant, de manière à traduire les demandes faites dans l'interface, en structures et noms utilisables par le langage d'implémentation auquel le fichier « include » est associé.
   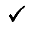 un fichier objet pour chaque fichier source créé en 603 ; chaque fichier objet correspond à ce stade à un fichier source prototype dont les fonctions ne sont pas complètement écrites,
- en 606, le programmeur édite ensuite les liens entre l'interface objet et le(s) fichier(s) objet de la partie implémentation du composant, de manière à générer un prototype de composant exécutable.

KBIM procède ensuite en 607 à un test d'intégrité de l'ensemble des composants prototypes ainsi développés pour le projet envisagé, en vérifiant que le projet créé est cohérent et fermé (c'est-à-dire que toutes les fonctionnalités nécessaires au projet sont présentes à l'intérieur de ce projet).

Lors du test d'intégrité, KBIM dispose de la liste et de la description des interfaces de tous les composants. Ainsi, KBIM peut rechercher, parmi ces composants, le composant qui remplit une fonctionnalité nécessaire au projet. Si plusieurs composants remplissent la fonctionnalité demandée, KBIM propose au programmeur de choisir entre ces composants. Le composant trouvé automatiquement par KBIM ou désigné par le programmeur est alors ajouté aux composants qui constituent le projet. Ce nouveau composant peut également nécessiter d'autres fonctionnalités que KBIM va essayer de résoudre. KBIM permet ainsi de résoudre automatiquement la plupart des fonctionnalités nécessaires pour un projet.

Si le projet n'est pas correctement fermé, KBIM édite un message d'erreur indiquant au programmeur les incohérences et celui-ci reprendra la succession des étapes 602 à 606 afin de modifier certains composants de l'application et/ou d'en ajouter ; si le projet est cohérent et fermé, le programmeur complète en 608 les prototypes des fonctions du code de la partie implémentation du composant, en écrivant la version complète des fonctions, dans le(s) fichier(s) source de cette partie implémentation.

En 609, le programmeur met en oeuvre le Makefile pour compiler chaque composant séparément, de manière à créer pour le code les fichiers objets qui permettront d'exécuter la fonctionnalité du composant. Lors de cette étape le Makefile fait intervenir le compilateur de dépendances ainsi que le(s) compilateur(s) du ou des langage(s) utilisé(s) pour élaborer le code. Les étapes 608 et 609 sont répétées pour chaque composant du projet en cours de développement.

Le programmeur met ensuite en oeuvre en 610 l'éditeur de liens pour créer un module exécutable pour chaque composant, ledit module étant associé à l'ensemble des fichiers objets créés lors des étapes de compilation 605 et 609 (l'interface objet ayant été créée lors de l'étape 605, alors que le(s) fichier(s) objet associé(s) au code a ou ont été créé(s) lors de l'étape 609).

Lors de cette édition de liens qui correspond à l'encapsulation du composant dans le module, l'éditeur vérifie que toutes les fonctionnalités fournies par les différentes interfaces du projet ont été effectivement décrites totalement dans un fichier source associé, et compilées.

### ■ Déclaration du composant

Une fois qu'un module exécutable a ainsi été créé pour chaque composant du projet, le programmeur doit déclarer l'existence de ces composants pour que ceux-ci soient pris en compte par le système. Cette déclaration est effectuée en 611, étape lors de laquelle le programmeur déclare chaque composant à un "loader", les loaders étant eux-mêmes des composants spécifiques du système selon l'invention.

Lors de cette étape 611, le loader auprès duquel on déclare un composant mémorise le composant dans une liste individuelle du loader qui rassemble l'ensemble des composants qui ont été déclarés auprès de lui.

Cette étape 611 est également une étape qui concerne globalement le projet en cours de développement, l'ensemble des composants développés pour un projet étant déclaré auprès d'au moins un loader - chaque loader correspondant à un média du système informatique (disque, réseau, etc..) sur lequel sont stockés les composants associés à ce loader.

### ■ Chargement du composant dans le système

On a décrit ci-dessus les étapes de création et de déclaration d'un "projet" qui peut comprendre plusieurs composants. On va décrire ci-dessous la mise en oeuvre de ces composants, qui est illustrée dans la partie inférieure de la figure 6.

En 620, un composant C1 appelle une fonctionnalité F1 qui lui est nécessaire

Deux possibilités se présentent pour cet appel :
- soit la fonctionnalité F1 est définie avec la propriété « loadtime » dans l'interface du composant C1 (la propriété « loadtime » est décrite plus haut). Dans ce cas, le GD va chercher et charger dans le système le composant qui remplit cette fonctionnalité F1, préalablement au chargement du composant C1.
   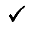 Si ce composant nécessite lui-même une fonctionnalité « loadtime », GD chargera alors également le composant nécessaire pour remplir cette fonctionnalité, toujours préalablement au chargement du composant C1. GD chargera ainsi récursivement tous les composants nécessaires pour remplir les différentes fonctionnalités « loadtime » qu'il va rencontrer (on va expliquer plus bas comment charger un composant dans le système),
- soit la fonctionnalité F1 est définie avec la propriété « runtime » (la propriété « runtime » est décrite plus haut).
   Le composant C1 doit alors faire un appel explicite à une autre fonctionnalité, « depmgr », fournie par le GD, pour appeler la fonctionnalité « runtime » F1. Pour ce faire, la fonctionnalité « depmgr » doit impérativement être déclarée avec la propriété « loadtime » dans l'interface de C1 afin de pouvoir utiliser cette interface dès le chargement et l'initialisation de C1 (voir plus haut le traitement des fonctionnalité « loadtime »).
   C1 pourra alors importer la fonctionnalité « runtime » F1 appelée en 620 au moment précis ou il doit l'utiliser. Le composant qui remplit cette fonctionnalité F1 sera alors chargé par GD.
   Si ce composant nécessite une fonctionnalité au moment de son chargement (fonctionnalité déclarée « loadtime » dans son interface), le composant remplissant cette fonctionnalité « loadtime » sera également chargé.
   GD chargera ainsi récursivement tous les composants nécessaires pour remplir les différentes fonctionnalités « loadtime » qu'il va rencontrer (on va expliquer plus bas comment charger un composant dans le système).
   La fonctionnalité F1 demandée initialement en 620 ne sera donc disponible pour C1 que si toutes les fonctionnalités « loadtime » rencontrées lors de sa résolution sont également résolues. Si une seule fonctionnalité demandée au chargement par C1 (fonctionnalité déclarée « loadtime ») n'est pas résolue, C1 ne sera pas chargé. C1 ne pourra en effet pas remplir sa mission fonctionnelle car il ne pourra pas utiliser une autre fonctionnalité qui lui est nécessaire.

Si la fonctionnalité que C1 doit importer n'est pas remplie par un des composants du projet auquel appartient C1 et avec lequel il est déclaré auprès d'un des loaders du système, le système, comme on va le montrer, identifie dans un autre projet un composant permettant de fournir cette fonctionnalité à C1.

A ces fins GD, qui est chargé en permanence dans la mémoire vive du système, recherche dans son "graphe des liens" si le fichier objet d'interface d'un des composants du graphe des liens indique que ce composant fournit la fonctionnalité demandée par C1.

Pour ce faire, le GD interprète la version « binaire » du fichier d'interface, qui est stockée dans le composant exécutable, et chargée/transmise par les composants « loaders » au GD à l'exécution.

Le GD cherche d'abord les interfaces possédant le même nom que celle demandée (importée). Lorsqu'il en trouve, il vérifie ensuite à l'intérieur de celles-ci que toutes les propriétés de la fonctionnalité demandée soient présentes et les contraintes et conditions éventuelles (version supérieure à 0.6.2, etc.) satisfaites.

Le graphe des liens du GD est une liste des composants qui sont chargés dans le système, c'est-à-dire qui sont non seulement déclarés comme on l'a décrit ci-dessus à propos de l'étape 611, mais dont le fichier d'interface objet a été importé dans une zone de mémoire vive de la cible, et qui est en relation avec d'autres composants du graphe des liens pour échanger des fonctionnalités fournies et/ou demandées.

Le graphe des liens, qui est mémorisé dans une zone de mémoire vive de la cible, est ainsi une image instantanée des composants chargés, ce graphe des liens pouvant évoluer de manière dynamique. Le graphe des liens est unique et associé au GD, le GD ayant accès aux informations de ce graphe des liens.

Si le GD détermine lors de l'étape 621 que la fonctionnalité appelée par C1 est fournie par un des composants du graphe des liens (que l'on nommera C2 « composant appelé», alors que C1 est le « composant appelant »), il établit un canal de communication entre ce composant C2 et le composant C1 en important en 627 des caractéristiques du composant C2 dans le composant C1.

Plus précisément, le GD construit pour C1 une structure de données appelée « view » (vue) qui offre, une vue sur les imports devant être réalisés. Cette « view » contient la valeur des propriétés ainsi que les pointeurs sur les fonctions importées (ou sur du code qui permet indirectement de les atteindre, comme par exemple un appel système, une migration de threads, etc). Cette « vue » est directement issue des éléments générés par le compilateur de dépendances dans les fichiers « include ».

Si maintenant le GD détermine en 621 que la fonctionnalité appelée par C1 n'est fournie par aucun des composants du graphe des liens, il va interroger les listes des loaders du système les unes après les autres, afin de déterminer si un des composants déclarés auprès de ces loaders offre la fonctionnalité demandée par C1. Cette interrogation des loaders est représentée par l'étape 622.

Lors de cette interrogation, le GD utilise une fonctionnalité « loader » qui possède les fonctions nécessaires pour lister les composants que chaque « loader » voit. La fonctionnalité « loader » permet au GD de comparer une fonctionnalité exportée par un composant du loader, à la fonctionnalité devant être importée. Elle permet également au GD de charger et décharger un composant individuel, du média auquel est associé le loader vers la mémoire vive de la cible.

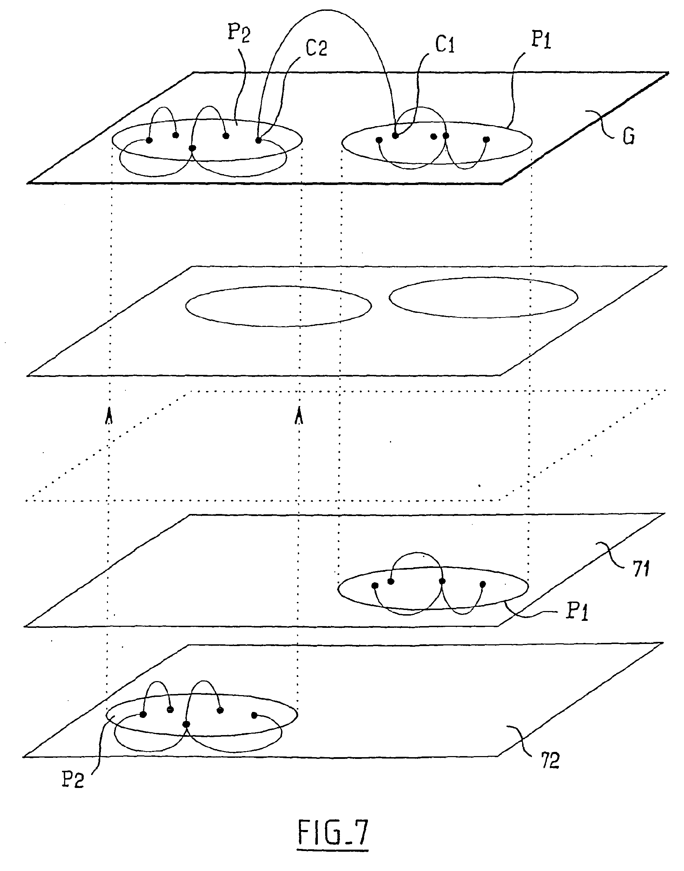

On précise que chacun des loaders du système selon l'invention est associé à un média particulier permettant de stocker des composants ; chaque loader pourra ainsi être associé à un disque de mémoire, ou à tout autre support d'enregistrement, de type CD ROM par exemple. La pluralité des loaders sera illustrée en particulier en référence à la figure 7.

Si un tel composant est localisé dans la liste d'un des loaders du système (étape 623), le premier loader dont la liste comprend un tel composant transmet en 625 au gestionnaire de dépendance l'interface objet du composant C2 identifié, et le GD transmet lui-même en 626 au composant C1 la « vue » de ce composant C2. (étape 627).

La « vue » de C2 a été mémorisée par le GD dans une zone mémoire du système qui est créée dynamiquement par le GD, au chargement du composant C2, et qui sera détruite en même temps que ce composant sera déchargé. Cette zone se trouve dans le même espace d'adresses que le composant qui peut y accéder.

Si maintenant la recherche du GD pour identifier dans la liste d'un des loaders un composant fournissant la fonctionnalité demandée s'avère infructueuse lors de l'étape 623, le système s'arrête en 624.

En tout état de cause, le chargement d'un composant C1 dans la mémoire vive du système provoque comme expliqué ci-dessus la recherche automatique par le GD d'un composant C2 offrant la fonctionnalité F1 qui est nécessaire au fonctionnement du composant C1.

Et si le composant C1 appelle non pas une seule, mais plusieurs fonctionnalités, le GD procédera de même à la recherche automatique de composants offrant ces fonctionnalités requises.

On remarquera que le système selon l'invention offre un degré de souplesse supplémentaire par rapport aux systèmes connus.

En effet, dans le cas des systèmes connus bâtis avec des entités le programmeur doit spécifier pour chaque entité appelante donnée la liste des autres entités du système qui sont nécessaires au fonctionnement de ladite entité appelante, et qui doivent être chargées dans le système pour le bon fonctionnement de cette entité appelante.

Ainsi, dans le cas de ces systèmes connus, les besoins des entités ne sont pas exprimés de manière générale en terme de fonctionnalités, mais en terme d'entités spécifiques (c'est le cas par exemple du langage Java).

Et dans le cas de l'invention chacun de plusieurs composants différents est susceptible d'être associé à un composant C1 appelant, dans la mesure où lesdits composants différents offrent la même fonctionnalité.

Et un avantage supplémentaire de l'invention découle des critères qu'il est possible d'associer aux composants, ces critères étant pris en compte par le GD lors de sa recherche automatique de composants offrant une fonctionnalité demandée par un premier composant.

En effet, lors de cette recherche de composants le GD recherche non seulement un composant offrant une fonctionnalité demandée, mais plus précisément un composant offrant ladite fonctionnalité en association avec une condition spécifique exprimée selon les critères qui ont été mentionnés plus haut dans ce texte.

Dans le cas des langages existants (par exemple du type langage Java - marque déposée), en effet, le programmeur doit obligatoirement créer un lien explicite entre une entité appelante et une entité appelée.

Il apparaît ainsi que la mise en oeuvre de ce type de système connu n'offre aucunement le même degré de souplesse que l'invention, qui se prête beaucoup mieux à la maintenance et à l'évolution (par exemple pour réaliser des versions enrichies, dans lesquelles on peut remplacer des composants offrant une fonctionnalité demandée par d'autres composants remplissant la même fonctionnalité d'une manière différente, ou encore ajouter de nouveaux composants remplissant ladite fonctionnalité afin d'offrir de nouvelles possibilités de choix au GD.

Ainsi, l'invention permet de bâtir des systèmes extrêmement évolutifs, dans lesquels on peut à volonté remplacer uniquement un ou plusieurs composants) désiré(s).

Chaque composant remplacé offre une fonctionnalité qui était déjà offerte par l'ancien composant qui est remplacé.

Toutefois, les moyens spécifiques pour remplir cette fonctionnalité, qu'ils soient logiciels et/ou matériels peuvent évoluer à volonté.

Dans le cadre d'applications telles que la maintenance d'un réseau des systèmes installés sur différents sites, ou encore la maintenance d'un ensemble de dispositifs mobile (tels que des téléphones portables ou des organisateurs personnels par exemple) que l'on ne souhaite pas rapatrier physiquement en un site central pour les faire évoluer, cette possibilité est particulièrement intéressante.

Ainsi, on pourra faire évoluer les applications installées sur les dispositifs du type mentionné ci-dessus par simple téléchargement d'un ou plusieurs composants) nouveau(x) sur ces dispositifs, à partir d'un site central, et ce sans qu'il soit nécessaire de déplacer physiquement les dispositifs qui peuvent être disséminés sur n'importe quel territoire.

En outre, les remplacements de ces composants ne nécessitent pas la recompilation du système informatique qui les met en oeuvre.

Dans le cas où un composant C2 offrant la fonctionnalité demandée par C1 a été identifié (avec éventuellement les critères satisfaisant une condition requise par l'interface de (1) et les caractéristiques de C2 ont été importées dans C1 en 627, le gestionnaire de dépendance va opérer différemment selon que le composant C2 fait déjà partie du graphe des liens ou non (étape 628).

Si C2 appartient déjà au graphe des liens, le GD passe directement à l'étape 633 de création d'un canal de communication entre C1 et C2. Pour ce faire, le système utilisera soit un des quatre modes de communication décrits ci-dessous, soit un mode spécifique créé spécialement, en fonction des caractéristiques spécifiées dans l'interface de C1 et/ou C2 :

### ⇒ Les appels directs :

C'est la méthode la plus rapide. La fonctionnalité ou méthode demandée est directement appelée, et son résultat directement retourné. Il n'y a aucun code intermédiaire. Le gestionnaire de dépendances choisit ce moyen lorsque les deux composants sont sur la même machine, dans le même espace d'adresses, et au même niveau de privilèges.

On définit un espace d'adresses comme une zone de mémoire logique dans laquelle des adresses de code ou de données ont une signification pour tous les composants accédant à cette zone. Un pointeur sur du code ou des données peut être transmis tel quel d'un composant à un autre et, sans que sa valeur ne soit modifiée, permettra d'accéder aux mêmes données.

Dans l'invention, le terme « espace d'adresses » implique également des privilèges communs, un espace d'adresse définissant un « espace » ou une classe d'objets ayant le même niveau de privilèges : les objets pointés d'un même espace d'adresse peuvent ainsi être accédés de la même manière par les différents composants.

Et on peut ainsi par exemple définir un espace « utilisateur » de niveau de privilèges inférieur, et un espace « superviseur » de niveau supérieur.

La cohérence des pointeurs entre l'espace « utilisateur » de chaque processus, et l'espace « superviseur » (système) est respectée (le processeur du système informatique ayant accès aux deux espaces en même temps), mais le code « utilisateur » ne peut pas référencer des données situées en espace « superviseur ».

Les privilèges sont des possibilités d'accès entre composants ; il est possible d'utiliser dans l'interface source les niveaux de privilèges suivants :

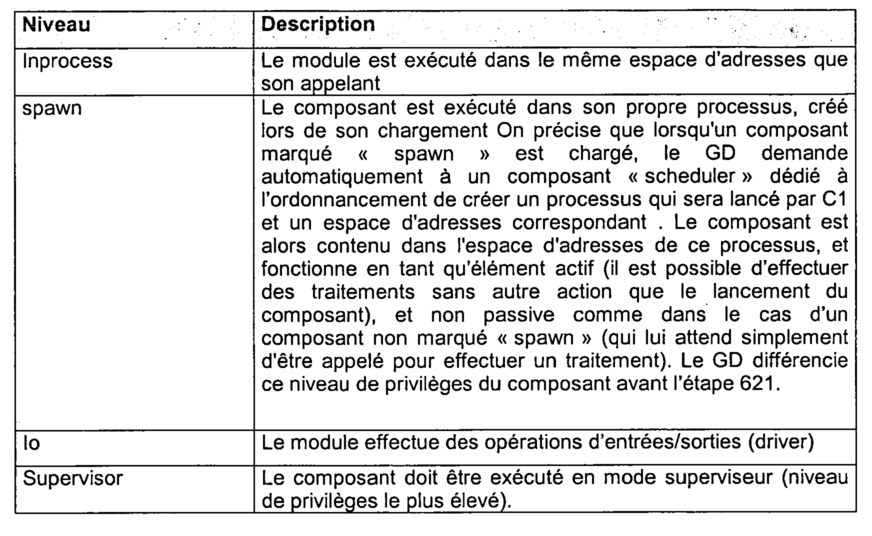

Pour affecter un de ces niveaux de privilèges à un composant, le programmeur fixe le paramètre correspondant dans la définition du module du composant, qui est contenue à l'intérieur d'un texte du type :

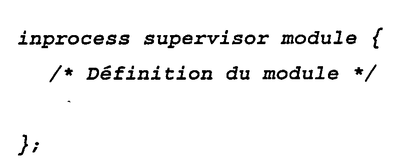

Ainsi, de manière générale, il est possible d'associer à chaque composant individuel un niveau de privilèges donné, ledit niveau de privilège conditionnant les possibilités d'accès de ce composant à d'autres composants, en fonction de niveaux de privilèges respectifs desdits autres composants.

Dit autrement, l'association d'un niveau de privilège un composant donne la possibilité à ce composant de « voir » les fonctionnalités offertes par les interfaces de certains composants, en fonction des niveaux de privilèges qui sont effectivement associés à ces autres composants.

Et comme on va le voir ci-dessous, cette hiérarchie d'accès entre les composants qui est établie par les niveaux de privilèges qui peuvent être associés individuellement aux différents composants peut être « court-circuitées » par des opérateurs associés individuellement à certains composants spécifiques.

Des exemples de tels appels sont les suivants :
- composant superviseur vers composant superviseur,
- composant utilisateur (c'est-à-dire du niveau de privilèges inférieur) vers composant utilisateur dans le même espace d'adresses (telle une application utilisant un composant gérant une bibliothèque de fonctions partagées et passives).

Cette méthode est la seule employée si le composant mémoire ne fournit pas de protection, ce qui peut être le choix de l'ingénieur qui construit le système pour son produit, ce qui fournit un système extrêmement rapide en l'absence de protection.

Le composant mémoire ne « fournit » pas de protection lorsque ce composant n'offre qu'un seul espace d'adresses, de type « système ». Ce type de gestion de mémoire n'offre aucune protection (tout fonctionnant dans le même espace et pouvant potentiellement détruire ou modifier le code ou les données appartenant à d'autres composants), mais est le seul possible sur certaines cibles ne possédant pas de « MMU » (memory management unit).

### ⇒ Les appels système:

L'invocation est déroutée vers un appel système. Celui-ci transfère les paramètres de la pile utilisateur vers la pile superviseur, change de niveau de privilèges, effectue l'appel, retourne au niveau de privilèges inférieur, et retourne le résultat de manière directe.

Cette méthode est sélectionnée lorsqu'un composant utilisateur (non privilégié) fait appel à une fonctionnalité d'un composant superviseur, à condition que cette dernière autorise les composants non privilégiés à l'utiliser.

Cette autorisation se fait au niveau du langage de description des dépendances, par le mot clé "promote". Et de manière plus générale, les mots-clé suivants peuvent être associés à un composant (dans la syntaxe du langage développé par la Demanderesse, les mots clés sont simplement préfixés à la propriété ou méthode dont ils doivent altérer le fonctionnement

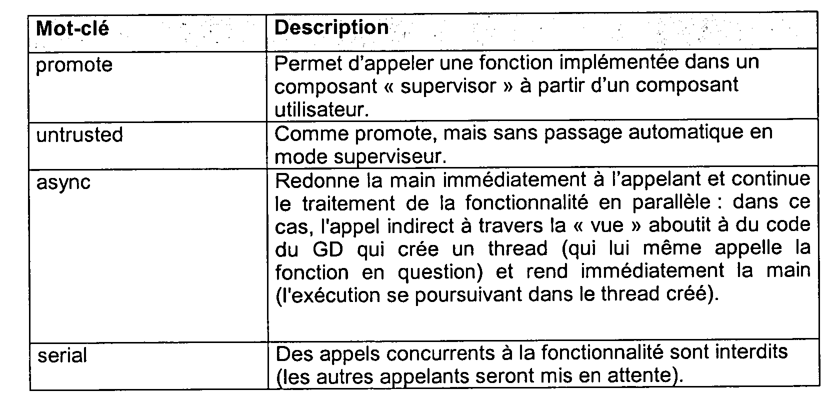

Ainsi, l'autorisation évoquée ci-dessus, mise en oeuvre par le mot clé « promote » permet de « court-circuiter » des niveaux de privilèges qui ont été établis par ailleurs, afin d'autoriser individuellement l'accès d'un composant à un autre, auquel son niveau de privilèges ne lui donnerait pas accès.

### ⇒ La migration de threads :

Le système selon l'invention sépare la gestion logique d'un thread d'exécution (identifiant, priorité, pile système, etc.) de sa gestion physique (contexte processeur, pile utilisateur, espace d'adresses dans lequel le thread est contenu, etc.).

Lorsqu'un composant fait appel à une fonction située dans un autre espace d'adresses, et ceci de manière synchrone (l'appelant est bloqué jusqu'à attente du résultat), l'appelant "migre" dans l'appelé et effectue le traitement.

A cet effet, la partie logique du thread "empile" sa partie physique actuelle, et se rattache à une nouvelle partie physique créée dans l'espace d'adresses de l'appelé.

Le code de la fonctionnalité voulue est alors exécuté dans le contexte de l'appelé (c'est-à-dire dans le même espace d'adresses et le même processus contenant), mais dans le thread logique de l'appelant. Une fois la fonction terminée, le thread appelant "dépile" sa partie physique originelle, et "migre" à nouveau dans l'appelant.

Le code de migration de threads se charge également de transmettre les paramètres dans les deux sens, copiant ou re-mappant les zones mémoires, les chaînes, etc. fournies en paramètre.

Ce mécanisme évite la bien plus coûteuse méthode traditionnelle consistant à composer un message, envoyer le message à un thread dans le composant appelé, suspendre le thread de l'appelant, décomposer le message dans l'appelé, exécuter la fonction voulue, recomposer un message pour le résultat, réveiller l'appelant, suspendre à nouveau l'appelé.

Cela évite également de nombreux problèmes liés au passage synchrone de messages, comme l'inversion de priorités (ici, la fonctionnalité appelée s'exécute avec la priorité de l'appelant), la comptabilisation des ressources (le temps machine est décompté à l'appelant), ainsi que la nécessité de maintenir un "pool" de threads dans le composant appelé, qui sont en sommeil, prenant des ressources mémoire inutiles, jusqu'à recevoir des appels, pour ensuite être insuffisants en nombre en cas de pointes d'appels (ici, les appelants migrent dans les appelés, il y a toujours le nombre exact de threads nécessaires).

Cette méthode optimise grandement le cas le plus courant d'appels hors-espace d'adresses : les appels synchrones sur la même machine.

### ⇒ Le passage de messages :

Contrairement au cas des systèmes à base de micro-noyau par exemple dans lesquels elle est systématiquement employée, cette méthode est utilisée uniquement pour les appels ne rentrant pas dans les catégories ci-dessus, tels que:
- appel local asynchrone (l'appelant ne reste pas bloqué en attente du résultat),
- appel distant vers une autre machine.

Le passage de messages consiste à encoder les paramètres fournis dans un message, à router le message vers le composant destinataire, le décoder, exécuter la fonction, stocker le résultat dans un message, renvoyé vers l'appelant. Cette méthode est, comme mentionné ci-dessus, particulièrement adaptée aux appels asynchrones (le message de résultat est envoyé ultérieurement), et aux appels distants, nécessitant la construction de paquets réseau de toute manière.

Reprenant la description faite en référence à la figure 6, la création d'un canal de communication est associée à l'appel de la fonction d'enregistrement du composant appelant C1 dans la partie implémentation du composant C2 appelé.

Cette fonction, nommée Register() fait partie de la fonctionnalité «component» qui est fournie par tous les composants du système, en plus de la fonctionnalité qui leur est propre. La fonctionnalité « component » comprend quatre fonctions :
- initialisation,
- désinitialisation,
- enregistrement,
- désenregistrement.

Si maintenant le GD détermine en 628 que le composant C2 ne fait pas partie du graphe des liens, il appelle en 629 le loader de ce composant C2 pour amener C2 dans la mémoire vive de la cible, appeler en 630 les fonctions d'initialisationde C2 et mettre à jour le graphe des liens en 631.

La figure 7 illustre ainsi le graphe des liens G, dans lequel le GD peut importer un composant ou un ensemble P2 de composants de l'emplacement de mémoire 72 d'un premier loader, afin de permettre à un composant C1 déjà présent dans le graphe des liens (ayant été préalablement importé de la zone de mémoire 71 d'un autre loader avec le projet P1 dont il fait partie) d'être en relation avec un composant appelé C2 qui a été identifié par le GD lors de l'étape 623 de recherche dans les loaders comme apportant une fonctionnalité nécessaire à C1.

On rappelle en effet que lors du test d'intégrité effectué par KBIM en 607 (voir figure 6), KBIM vérifie que chaque fonctionnalité appelée par un composant est offerte non pas strictement par un composant d'un même projet, mais de manière plus générale par un composant chargé dans le système logiciel.

Revenant encore à la figure 6, l'étape 631 débouche sur l'étape 633 déjà décrite.

Et si on a décrit le chargement d'un composant C2 appelé par un composant C1, on comprend que le composant C1 a lui-même été appelé par un autre composant, et qu'il a été nécessaire d'initier l'appel des fonctionnalités au démarrage du système.

A cet effet, lors du lancement d'une application, le GD demande une fonctionnalité « interaction » et recherche un composant fournissant cette fonctionnalité. Le GD peut également importer un composant qui demande cette fonctionnalité. Dans tous les cas, la fonctionnalité « interaction » va appeler un autre composant, qui à son tour appellera au moins un autre composant.

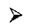 **Le gestionnaire de dépendances**

On a dit que le gestionnaire de dépendances est un composant chargé en permanence dans le système selon l'invention. Il permet de construire les liens entre les différents composants qui constituent une application ; ces liens sont établis à partir des interfaces des composants.

Selon un aspect avantageux de l'invention, seuls les composants utiles pour le fonctionnement de l'application et du système seront chargés, optimisant ainsi les ressources nécessaires. Cette optimisation peut se faire selon l'un des modes suivants :

### ■ Chargement automatique des composants lors de l'exécution

Lorsqu'un composant est chargé pour être exécuté, le gestionnaire de dépendances analyse ses dépendances telles qu'exprimées dans son interface et recherche automatiquement à résoudre toutes les dépendances qui y sont exprimées, c'est à dire à fournir au composant toutes les fonctionnalités dont il a besoin, mais également à « fermer » le système des dépendances en recherchant de même à fournir à tout composant ainsi mis en oeuvre les fonctionnalités dont il a lui-même besoin.

Le GD charge alors automatiquement dans le graphe des liens les composants résolvant les interfaces importées dont la propriété est « loadtime», résout également leurs dépendances et crée les canaux de communication entre ces différents composants, en fonction de leurs emplacements respectifs.

Un canal de communication peut ainsi être créé selon tout mode de communication tel que défini plus haut ; il est constitué de n'importe quelle voie de transmission de données (spécifique à chaque mode de communication) à même de réaliser l'appel d'une fonctionnalité avec les paramètres associés, et la récupération de la ou des valeurs de retour résultant du traitement effectué par la fonctionnalité.

Dès lors que les canaux de communication sont créés, les composants peuvent communiquer directement entre eux.

### ■ Chargement et déchargement dynamique des composants:

Lorsqu'une interface importée a la propriété « runtime », le composant qui utilise cette interface demandera le chargement du composant qui implémente cette interface, seulement lorsque ce composant aura besoin de la fonctionnalité associée à l'interface. Cette propriété « runtime » est ainsi une alternative à la propriété « loadtime » déjà décrite.

Cette gestion permet de déterminer précisément les propriétés de l'implémentation de l'interface qui doit être chargée, en fonction de paramètres dynamiques, qui ne sont pas connus lors du chargement du composant demandant la fonctionnalité.

Par exemple, un composant « texte » peut importer une interface codec pour décompresser les fichiers qu'il reçoit, ce composant « texte » pouvant recevoir plusieurs types de fichiers.

Lors de la réception d'un fichier, le composant « texte » peut rechercher l'interface codec adaptée à la décompression de ce fichier, en fonction de son extension par exemple. Pour ce faire, il utilise la fonctionnalité Query() du gestionnaire de dépendances, en lui passant les paramètres de recherche.

Il peut ensuite donner l'ordre au gestionnaire de dépendances, à l'aide de la fonctionnalité Open(), de charger le composant. Il peut alors utiliser l'interface codec de ce composant pour décompresser le fichier.

Lorsque la décompression est terminée, le composant « texte » peut demander le déchargement du composant codec utilisé.

Il est ainsi possible de charger dynamiquement un composant. Cette possibilité permet de ne charger des composants que lorsqu'ils sont nécessaires pour effectuer un traitement. Le composant peut ensuite être déchargé lorsque son traitement est terminé.

Selon un autre exemple, une application peut afficher une image lors de son chargement et ne plus avoir ensuite à traiter des images de ce format, ou qu'exceptionnellement.

Cette application peut donc charger dynamiquement le composant de traitement du format de l'image, lui demander de traiter le fichier pour afficher l'image et ensuite décharger ce composant. Le composant n'est chargé en mémoire que lorsqu'il est strictement nécessaire, ce qui permet de partager les ressources mémoires entre les différents composants, en fonction de traitements à réaliser à un instant donné.

Cette méthode permet donc de réduire considérablement les ressources mémoire nécessaires.

Le gestionnaire de dépendances peut également gérer automatiquement le chargement et le déchargement de composants en fonction de leurs statistiques d'utilisation et des ressources mémoire. Cette gestion devient alors complètement transparente pour le programmeur de l'application.

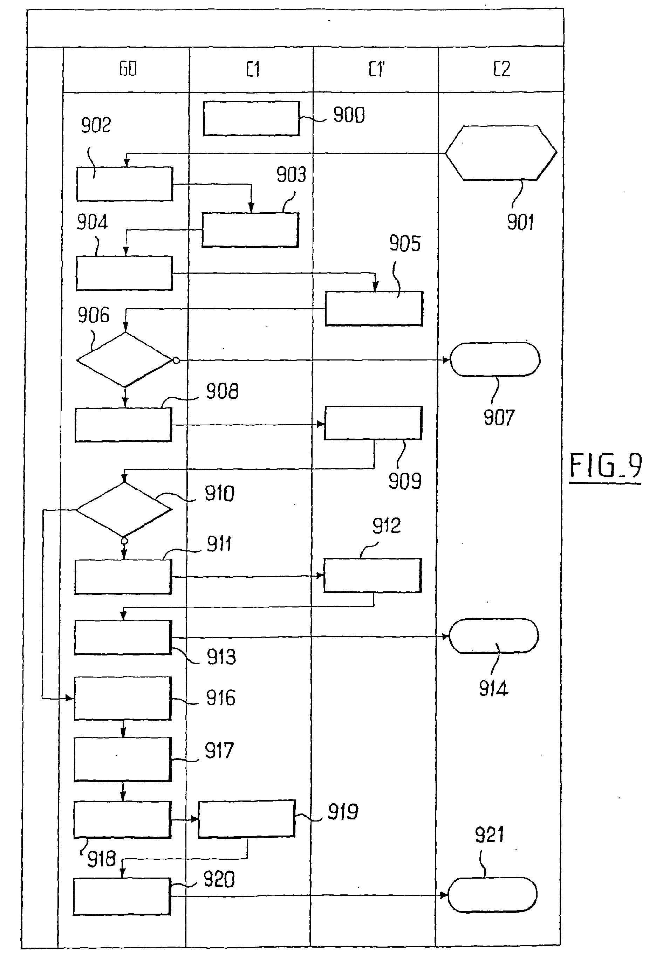

Le schéma de la figure 8 montre l'intérêt de la gestion dynamique des composants sur un système possédant peu de ressources mémoire. Dans cet exemple, l'application affiche deux images, une GIF et une JPEG. Chaque image est traitée de façon séquentielle, ce qui permet donc de charger et de décharger les composants dynamiquement.

Dans cet exemple, le fait de charger et décharger les composants dynamiquement permet de réduire la ressource mémoire maximum nécessaire.

En outre dans la plupart des cas, ce chargement et déchargement ne seront pas perceptibles en terme de performances.

En effet, les modules de composants ont une taille réduite (de l'ordre de quelques centaines d'octets à quelques kilooctets). Leur chargement en mémoire est donc une opération qui est réalisée très rapidement. En outre, la plupart des applications effectuent des traitements séquentiels et les informations en entrée sont souvent fournies par un utilisateur humain et les informations de sortie sont fournies à l'utilisateur.

Donc à l'échelle humaine, les quelques micro-secondes qui seront nécessaires pour charger et décharger un composant, ne seront même pas perceptibles ; dans le cas de l'exemple illustré par la figure 8, les opérations se font selon la séquence suivante :
- chargement d'une image (chargement du code de JPEG),
- affichage de cette image à l'écran,
- l'utilisateur,
- chargement d'une autre image (déchargement du code JPEG et déchargement du code GIF),
- affichage de cette autre image.

Le temps de chargement et déchargement est insignifiant par rapport aux autres traitements.

### ■ Optimisation des ressources par le gestionnaire de dépendances:

Le gestionnaire de dépendances gère un compteur d'utilisation pour chaque composant. Ce compteur compte le nombre d' « importeurs » du composant, c'est-à-dire de composants qui importent une fonctionnalité du composant auquel le compteur est associé. Un composant est déchargé dès que son compteur d'utilisation a décru jusqu'à 0.

Lorsqu'un composant n'est plus utilisé, le gestionnaire de dépendances libère automatiquement les ressources utilisées pour ce composant.

On remarquera que l'invention permet ainsi d'optimiser de manière particulièrement efficace les ressources mis en oeuvre par le système, sans peser sur le fonctionnement général du système.

En effet, les systèmes connus mettent généralement en oeuvre des moyens périodiques de vérification de l'état des composants, lesdits moyens étant mis en oeuvre par une tâche spécifique qui « prend la main » périodiquement de manière à identifier les composants devant être déchargés.

Une telle tâche périodique de vérification est mal adaptée au temps réel, car elle ne permet pas de suivre les modifications d'état des composants avec une bonne réactivité.

De plus, ce type de fonctionnement impose un environnement multitâche du fait de la présence de la tâche de vérification.

On trouvera une illustration de ce type de fonctionnement mettant en oeuvre une vérification périodique dans le langage Java, la tâche de vérification mettant en oeuvre un élément du type « garbage collector ».

### ■ Précisions sur les fonctionnalités réalisées par un élément matériel :

On a dit que la partie implémentation d'un composant pouvait correspondre à un code (qui comprend un ou plusieurs programmes afin de remplir la fonctionnalité du composant), mais également à une implémentation matérielle par des éléments de hardware comprenant des circuits électroniques.

Ainsi, une fonctionnalité peut être réalisée par un composant C1 qui l'implémente en utilisant un circuit électronique (circuit de décompression vidéo par exemple). Mais cette fonctionnalité peut également être réalisée par un composant C1 qui l'implémente totalement par logiciel. Si pour une application, le circuit électronique est bien présent et fonctionne correctement, le système utilisera le composant C1. Si par contre, le circuit électronique n'est pas présent ou s'il ne fonctionne pas correctement, le système utilisera le composant C1', de façon transparente pour les autres composants. Dans tous les cas, la fonctionnalité est réalisée.

De même, si une fonctionnalité est aujourd'hui réalisée par du code logiciel, elle pourra être réalisée plus tard par un composant qui l'implémente en utilisant un circuit électronique, de façon totalement transparente pour les autres composants.

Le schéma de la figure 9 illustre le remplacement d'un composant C1 par un autre composant, C'1, qui exporte la même fonctionnalité.

C1 étant en cours d'exécution comme indiqué en 900, un composant C2 qui possède un canal de communication avec C1 et lui est ainsi relié dans le graphe des liens demande en 901 au GD le remplacement de C1 par C'1.

GD demande alors à C1 de sauvegarder son état courant (étape 902), ce que C1 réalise en 903. GD charge et initialise ensuite C'1 (904 et 905).

Si le chargement ou l'initialisation de C'1 ne se sont pas correctement effectués (étape 906), le GD retourne une erreur au demandeur C2.

Si le chargement et l'initialisation de C'1 se sont correctement déroulés, le GD transmet en 908 l'état courant de C1 à C'1, afin que C'1 se mette dans le même état.

A ces fins, C'1 interprète l'état courant transmis (909) et l'accepte ou le rejette (910).

S'il le rejette, le GD décharge C'1 (911) et le déinitialise (912). Le GD retourne ensuite un message d'erreur au demandeur C2 (913 et 914).

Si maintenant C'1 accepte l'état courant de C1, le GD met à jour son graphe (916) en y remplaçant C1 par C'1. Il reconstruit ensuite les canaux de communication pour C'1 (917) ; ces canaux sont ceux qui étaient utilisés pour C1. Ensuite le GD déinitialise et décharge C1 (918 et 919).

Le remplacement s'étant effectué correctement, GD en informe C2 (920, 921) ; celui-ci peut continuer son traitement.

On a décrit ci-dessus le principe du système selon l'invention, et sa mise en application (entre autres en référence à la figure 6).

Précisons qu'il est également possible de paramétrer l'interface du composant C1 pour que, lorsque le GD recherche un composant qui exporte une fonctionnalité importée par C1, il poursuive sa recherche dans l'ensemble des composants chargés dans le système et transmette à C1 une « vue » de chacun des composants du graphe des liens qui exporte cette fonctionnalité, dans une étape équivalente à l'étape 627 de la figure 6.

En fonction des critères de choix paramétrés, C1 pourra alors choisir le composant qui lui convient parmi ceux identifiés par le GD.

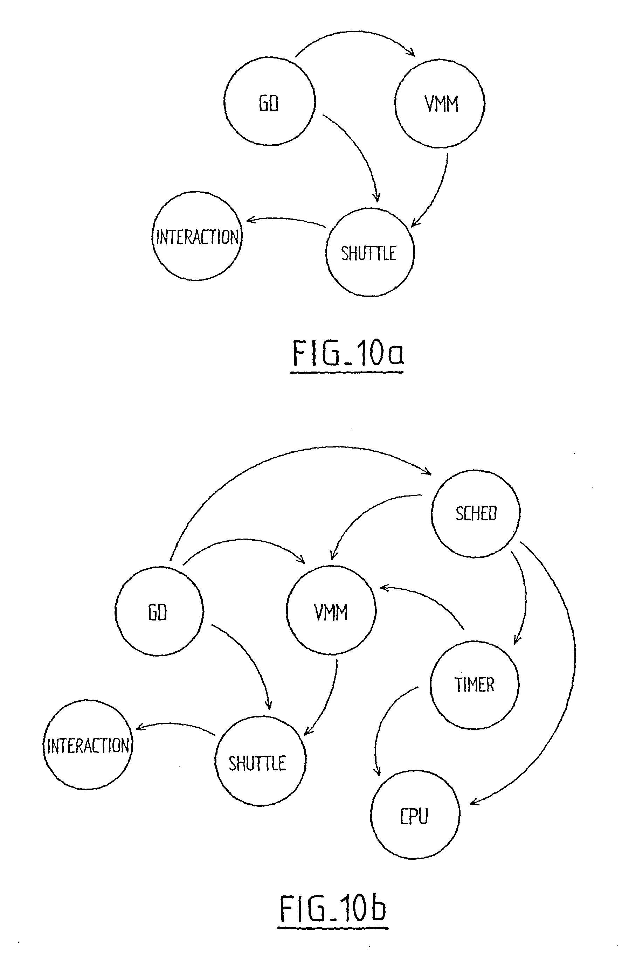

Précisons également que le système selon l'invention nécessite dans sa version actuelle quatre composants au minimum pour fonctionner, comme représenté sur la figure 10a (sur laquelle les flèches indiquent les fonctionnalités transmises entre composants - ce type de figure est ainsi une représentation du graphe des liens).

Il s'agit des composants suivants :
- « interaction » qui comme on l'a dit est nécessaire pour initier le fonctionnement du système,
- « shuttle » qui est appelé par « interaction », et qui appelle lui-même les deux composants suivants :
- le GD,
- et enfin « VMM », dit composant mémoire ou de gestion de mémoire, qui appelle également le GD par ailleurs.

La figure 10b montre quant à elle une configuration également minimale du système, dans laquelle trois composants « CPU », « TIMER3 et « SCHED » ont été ajoutés afin d'autoriser une gestion multi-threads.

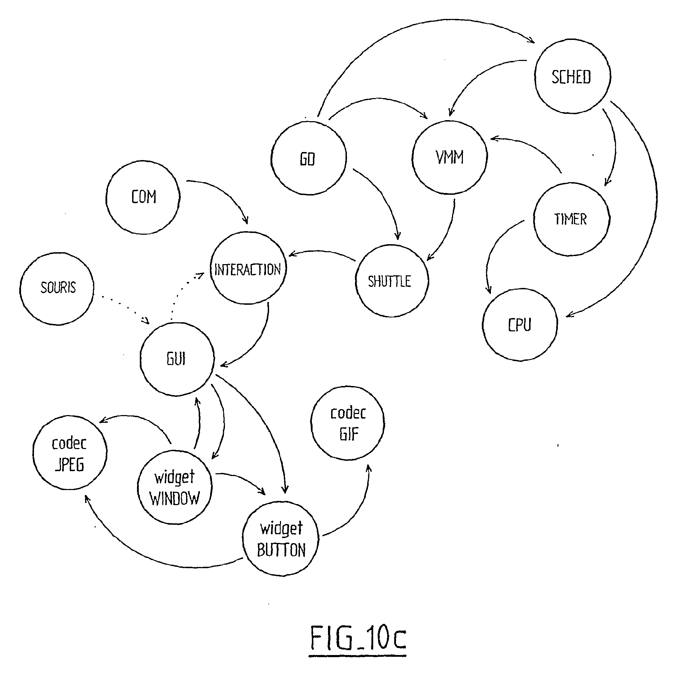

Enfin, la figure 10c représente une configuration enrichie d'un système selon l'invention, qui constitue une petite application.

Sur cette figure, le composant « interaction » utilise un composant « COM » de communication pour échanger des données sur un réseau et utilise le composant « GUI » (interface graphique) pour afficher des présentations graphiques.

Le composant « SOURIS » permet de gérer le périphérique SOURIS. Il transmet des informations sur les changements d'état de ce périphérique (déplacement, clic sur les boutons). Le composant « GUI » utilise les composants « WINDOW » et « BUTTON » afin de réaliser les affichages demandés par le composant « INTERACTION ».

Les composants « WINDOW » et « BUTTON » utilisent les composants codec GIF et JPEG afin d'afficher des images dans leurs zones d'affichage respectives.

Les composants GUI, COM, WINDOW, BUTTON, GIF et JPEG utilisent également des fonctionnalités des composants de base du système. Cependant, les liens correspondant à ces fonctionnalités ne sont pas représentés sur le schéma de la figure 10c afin de ne pas alourdir cette figure.

Les composants sont classés en domaines, qui sont des catégories ne correspondant pas à un niveau de privilèges, mais à un type d'utilisation. Différents domaines sont les suivants, avec certains composants associés :

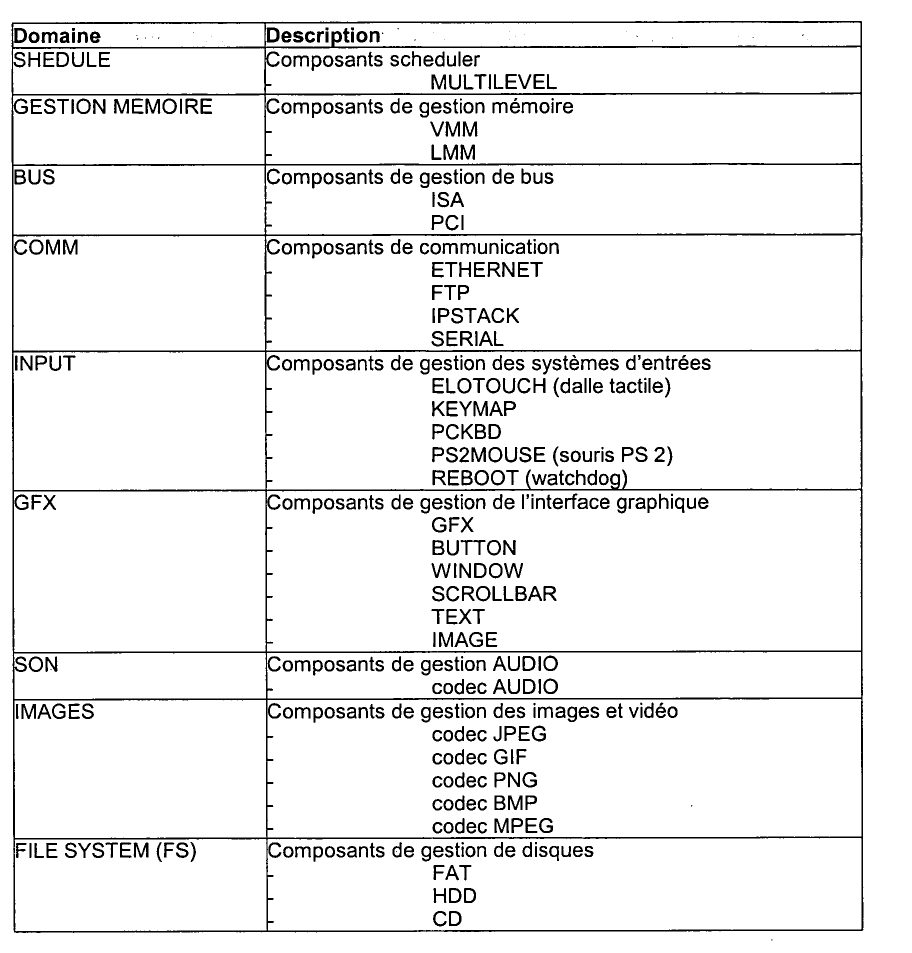

On notera que du fait que tous les composants du système selon l'invention sont réalisés suivant le même format, le système gère de la même manière tous les composants, et les propriétés avantageuses des composants évoquées ci-dessus s'appliquent de la même manière aux composants, quel que soit leur niveau de privilèges.

Il apparaît finalement que le système selon l'invention permet :
- aux programmeurs d'avoir une vue synthétique de tous les éléments du système d'exploitation, quel que soit leur niveau de privilèges,
- d'utiliser les mêmes outils pour créer ces différents éléments,
- de réaliser des interconnexions entre les différentes parties, sans restriction. La puissance du système n'est pas exprimée par son nombre de composants, mais le nombre d'interconnexions possibles, dans les systèmes traditionnels (à la fois monolithique et micro-noyau), les moyens de communication entre les différentes parties sont limités et figés. Il faut systématiquement passer par un goulot d'étranglement arbitraire (les appels systèmes étant en nombre limité, pour le noyau, que ce soit un noyau monolithique ou un micro-noyau, etc.). La gestion de dépendances et la création dynamique de moyens de communication permet de s'affranchir de cette limitation,
- d'offrir des propriétés égales à tous les types de code. Dans le cas de l'invention, il n'est en effet plus nécessaire de concevoir un système de gestion de modules noyau, de bibliothèques, ou même de "plug-ins" d'applications. Tout cela est remplacé par le système de gestion des composants,
- de créer autant de composants, par le futur, que de fonctionnalités qui devront être remplies. Ceci permet au système selon l'invention d'être totalement évolutif.

En outre, comme on l'a vu sur la description ci-dessus, l'invention montre une grande lisibilité et une réactivité aux développeurs, en retournant des messages d'erreurs en de nombreuses occurrences.

En effet, lors du chargement du composant, une fonction (Init) est automatiquement exécutée pour ce composant. Cette fonction (Init) vérifie que l'ensemble des composants nécessaires au fonctionnement du composant chargé est quand même chargé dans le système. Dans le cas où cette vérification n'est pas satisfaisante (au moins une fonctionnalité demandée n'est pas remplie, ou encore un composant offrant une fonctionnalité requise est associé à un élément matériel défectueux, etc..., un message d'erreur est retourné à l'appelant.

En outre, dans le cas où un composant appelé est associé à un élément défectueux (matériels et/ou logiciels), il est automatiquement déchargé dans la mémoire vive du système.

Par ailleurs, on a vu en référence à la figure 9 que des messages d'erreur étaient également retournés lors de l'appel de composants.

Ainsi, si un élément matériel ou logiciel est absent ou défectueux pour faire fonctionner un composant appelant, un message d'erreur permet d'en être au courant sans nécessiter une opération de tests complète du système.

## Revendications

1. Procédé de développement de projets informatiques (P1, P2) destinés à être mis en oeuvre par un système informatique, procédé comprenant :
• une phase d'analyse fonctionnelle (601) en vue de recenser les fonctionnalités devant être assurées,
• une phase de création de composants (C1, C2) du projet pour remplir lesdites fonctionnalités, chaque composant étant constitué de deux parties principales :
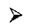 une partie implémentation (IMP),
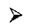 une partie d'interface descriptive (INT),
• une phase de compilation,
**caractérisé en ce que** :
• pendant la phase de compilation chaque composant est compilé indépendamment,
• la compilation individuelle de chaque composant implique la compilation du fichier source de l'interface du composant en une interface objet, pour constituer une forme binaire de l'interface incluse dans le fichier exécutable (M) du composant, et
• ledit système est entièrement constitué de composants.

2. Procédé selon la revendication précédente **caractérisé en ce que** la partie interface d'un composant décrit quelle fonctionnalité est fournie par le composant et quelles fonctionnalités devront lui être fournies, lors de son exécution.

3. Procédé selon la revendication précédente, **caractérisé en ce** la partie interface d'un composant définit dans un langage de dépendances le format des données devant être fournies en entrée au composant et le format des données en sortie du composant.

4. Procédé selon la revendication précédente, **caractérisé en ce que** ledit format est dépendant uniquement de la fonctionnalité réalisée, et non de la façon dont la fonctionnalité est réalisée par la partie implémentation du composant.

5. Procédé selon l'une des trois revendications précédentes, **caractérisé en ce que** des propriétés peuvent être associées avec des fonctionnalités demandées par le composant et/ou avec des fonctionnalités que le composant fournit.

6. Procédé selon l'une des quatre revendications précédentes, **caractérisé en ce que** des critères peuvent être définis à partir de propriétés associées à l'interface du composant.

7. Procédé selon la revendication précédente, **caractérisé en ce que** lesdites propriétés associés à l'interface sont précisées avec des opérateurs associés à la description faite dans l'interface et lesdits opérateurs permettent de n'autoriser l'importation d'une autre interface que si la valeur d'une propriété de cette autre interface correspond à un critère défini.

8. Procédé selon l'une des deux revendications précédentes, **caractérisé en ce que** lesdits critères peuvent être prédéterminés lors de la conception du projet informatique.

9. Procédé selon l'une des trois revendications précédentes, **caractérisé en ce que** lesdits critères peuvent être déterminés dynamiquement lors de l'exécution même du projet informatique.

10. Procédé selon l'une des huit revendications précédentes, **caractérisé en ce qu'**une fonctionnalité (F1) requise par un composant appelant (C1) peut-être définie dans la partie interface dudit composant appelant (C1) avec une propriété « loadtime », de manière à ce que le composant qui remplit ladite fonctionnalité requise soit recherché et chargé préalablement au chargement dudit composant appelant (C1).

11. Procédé selon l'une des revendications précédentes, **caractérisé en ce que** la compilation de l'interface d'un composant est réalisée par un compilateur de dépendances pour produire une forme binaire de l'interface qui est incluse dans le composant exécutable (M).

12. Procédé selon la revendication précédente, **caractérisé en ce que** pour la compilation de l'interface, le compilateur de dépendances réalise les opérations suivantes :
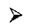 analyse du texte du fichier source de l'interface,
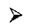 vérification de sa cohérence,
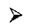 traduction en données binaires qui seront compréhensibles par un composant (GD) chargé en permanence dans le système.

13. Procédé selon la revendication précédente, **caractérisé en ce que** lors de la compilation d'un composant, le compilateur de dépendances génère automatiquement des fichiers pour appeler les fonctionnalités citées dans l'interface du composant et devant être fournies au composant.

14. Procédé selon l'une des revendications précédentes, **caractérisé en ce qu'**un graphe des liens recense les composants qui sont chargés dans le système.

15. Procédé selon l'une des revendications précédentes, **caractérisé en ce que** ladite forme binaire de l'interface est exploitable à l'exécution par le système, afin de relier les composants entre eux selon les fonctionnalités demandées.
